(19)

Europäisches Patentamt

European Patent Office

Office européen des brevets

(11) **EP 4 542 435 A1**

(12) **EUROPEAN PATENT APPLICATION**

(43) Date of publication:
**23.04.2025 Bulletin 2025/17**

(21) Application number: **23204348.9**

(22) Date of filing: **18.10.2023**

(51) International Patent Classification (IPC):
**G06F 30/23** $^{(2020.01)}$     *G06F 111/10* $^{(2020.01)}$
*G06F 113/08* $^{(2020.01)}$     *G06F 119/10* $^{(2020.01)}$

(52) Cooperative Patent Classification (CPC):
**G06F 30/23;** G06F 2111/10; G06F 2113/08;
G06F 2119/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Industry Software NV
3001 Leuven (BE)**

(72) Inventors:
• **BIZZARRI, Davide
  Vorst 1190 (BE)**
• **BERIOT, Hadrien
  Le Vesinet 781110 (FR)**
• **ATAK, Onur
  Cambridge CB1 8BN (GB)**

(74) Representative: **Siemens Patent Attorneys
Postfach 22 16 34
80506 München (DE)**

(54) **METHOD FOR MODELING ACOUSTICS IN AN UNBOUNDED DOMAIN**

(57)     A computer-implemented method for modeling acoustics of an object (OBJ) as a model (MDL) in an unbounded domain to determine a field variable (FDV) within a control volume (CVL) of the unbounded domain, comprising:

(a) Providing a coordinate system (COS) mapping the positions (POS) in said control volume (CVL),

(b) Providing a geometrical model of a sound source (SDS) in said control volume (CVL) based on said coordinate system.

To improve the efficiency of numerically modelling transient (vibro-) acoustics wave propagation phenomena in unbounded domains the additional steps are proposed:

(c) Constructing a convex shape (CXS) around said sound source (SDS) using Quickhull algorithm (QHA),

(d) Extruding infinite elements (IFE) starting from the convex shape (CXS),

(e) Transforming the coordinate system (COS) into a field variable coordinate system (FVC) by mapping a radial coordinate of the coordinate system (COS) to an auxiliary coordinate ($v(s, t, v)$) extending from the convex shape (CXS) to the infinite elements (IFE),

(f) Constructing of field shape functions (FSF) using the auxiliary coordinate ($v(s,t,v)$),

(g) Determining the field variable (FDV) by solving the model (MDL).

Furthermore, a computer-system (CPS) for simulating a system by applying the computer-implemented method is provided.

FIG 2

**EP 4 542 435 A1**

**Description**

FIELD OF THE INVENTION

The invention relates to a computer-implemented method for modeling acoustics in an unbounded domain to determine a field variable within a control volume of the domain, comprising:

(a) Providing a coordinate system mapping the control volume,
(b) Providing a geometrical model of a sound source in

said control volume based on said coordinate system.

Furthermore, the invention relates to a computer product, a computer-readable medium and a system.

The analysis of the sound characteristics of industrial machines is crucial in various applications (for example in the automotive, aerospace and marine industry). On one side, in many instances engineers need to design their products paying attention to the sound quality and sound levels, to make them more attractive for potential customers. On the other side, the increasing awareness on the potential health risks linked to exposures to high sound levels has led to more stringent regulations on sound emissions in urban environment.

In addition, in the industrial world there is a growing interest towards Digital Twins. In this context, high fidelity 3D simulation models are used not only during the design phase of a product cycle, but also during the operation phase, where they can be combined with measurement data, through virtual sensing algorithms, to gain further insights into the state of the product. High fidelity 3D simulation models are typically more complex and expensive to develop, but they provide a more accurate and realistic simulation of the system being modeled than surrogate models.

Smart Virtual Sensing algorithms are known from [24].

In the context of this disclosure a digital twin is a virtual replica of a physical object, system, or process that is used to simulate and analyze its behavior and performance. A digital twin is typically created using data from sensors, cameras, and other sources that capture information about the physical object or system and combine it with the simulation model of the said object. The digital twin can be used to test and optimize its performance under different conditions. They enable better monitoring and control of physical systems, allowing for predictive maintenance and improved performance.

The digital twin technology is instrumental in many scenarios, for instance, in structural health monitoring applications. Due to the nature of this problem, compact representations of high-fidelity models, that can be used to run stable time domain simulations, are required.

Digital twin technology is known from for example the publication Hartmann, D., & Van der Auweraer, H. (2022) "The Executable Digital Twin: merging the digital and the physics worlds" arXiv preprint arXiv:2210.17402 or from De Miguel, A. G., Atak, O., & Blanco, M. A., "A Digital Twin for full-field monitoring in multi-channel control with applications to direct field acoustic testing".

For many (vibro-) acoustic applications, it is required to model sound waves travelling to infinity, meaning the sound waves are travelling away and not being reflected back.

BACKGROUND OF THE INVENTION

Some background knowledge known to a skilled person in the technical field of the invention has been provided by the following publications:

[1] D. Givoli, Computational absorbing boundaries, in: Computational acoustics of noise propagation in fluids-finite and boundary element methods, Springer, 2008, pp. 145-166.
[2] A. Bayliss, E. Turkel, Radiation boundary conditions for wave-like equations, Communications on Pure and applied Mathematics 33 (1980) 707-725.
[3] J.-P. Berenger, A perfectly matched layer for the absorption of electromagnetic waves, Journal of computational physics 114 (1994) 185-200.
[4] U. Basu, A. K. Chopra, Perfectly matched layers for transient elastodynamics of unbounded domains, International journal for numerical methods in engineering 59 (2004) 1039-1074.
[5] J. Diaz, P. Joly, A time domain analysis of pml models in acoustics, Computer methods in applied mechanics and engineering 195 (2006) 3820-3853.
[6] Z. Chen, X. Wu, Long-time stability and convergence of the uniaxial perfectly matched layer method for time-domain acoustic scattering problems, SIAM Journal on Numerical Analysis 50 (2012) 2632-2655.
[7] A. Modave, A. Kameni, J. Lambrechts, E. Delhez, L. Pichon, C. Geuzaine, An optimum pml for scattering problems in the time domain, The European Physical Journal-Applied Physics 64 (2013).
[8] A. Modave, J. Lambrechts, C. Geuzaine, Perfectly matched layers for convex truncated domains with discontinuous galerkin time domain simulations, Computers & Mathematics with Applications 73 (2017) 684- 700.

[9] S. Francois, H. Goh, L. F. Kallivokas, Non-convolutional second-order complex-frequency-shifted perfectly matched layers for transient elastic wave propagation, Computer Methods in Applied Mechanics and Engineering 377 (2021) 113704.

[10] B. Kaltenbacher, M. Kaltenbacher, I. Sim, A modified and stable version of a perfectly matched layer technique for the 3-d second order wave equation in time domain with an application to aeroacoustics, Journal of computational physics 235 (2013) 407-422.

[11] P. Bettess, O. Zienkiewicz, Diffraction and refraction of surface waves using finite and infinite elements, International Journal for Numerical Methods in Engineering 11 (1977) 1271-1290.

[12] K. Gerdes, The conjugated vs. the unconjugated infinite element method for the helmholtz equation in exterior domains, Computer Methods in Applied Mechanics and Engineering 152 (1998) 125-145.

[13] R. Astley, G. Macaulay, J.-P. Coyette, L. Cremers, Three-dimensional wave-envelope elements of variable order for acoustic radiation and scattering. part i. formulation in the frequency domain, The Journal of the Acoustical Society of America 103 (1998) 49-63.

[14] L. Cremers, K. Fyfe, J. Coyette, A variable order infinite acoustic wave envelope element, Journal of Sound and Vibration 171 (1994) 483-508.

[15] O. Zienkiewicz, K. Bando, P. Bettess, C. Emson, T. Chiam, Mapped infinite elements for exterior wave problems, International Journal for Numerical Methods in Engineering 21 (1985) 1229-1251.

[16] W. Eversman, Mapped infinite wave envelope elements for acoustic radiation in a uniformly moving medium, Journal of Sound and Vibration 224 (1999) 665-687.

[17] D. S. Burnett, A three-dimensional acoustic infinite element based on a prolate spheroidal multipole expansion, The Journal of the Acoustical Society of America 96 (1994) 2798-2816.

[18] D. S. Burnett, R. L. Holford, Prolate and oblate spheroidal acoustic infinite elements, Computer Methods in Applied Mechanics and Engineering 158 (1998) 117-141.

[19] D. S. Burnett, R. L. Holford, An ellipsoidal acoustic infinite element, Computer methods in applied mechanics and engineering 164 (1998) 49-76.

[20] R. Astley, Transient wave envelope elements for wave problems, Journal of Sound and Vibration 192 (1996) 245-261.

[21] R. Astley, J. Hamilton, Infinite elements for transient flow acoustics, in: 7th AIAA/CEAS Aeroacoustics Conference and Exhibit, 2001, p. 2273.

[22] R. Astley, J.-P. Coyette, L. Cremers, Three-dimensional wave-envelope elements of variable order for acoustic radiation and scattering, part ii. formulation in the time domain, The Journal of the Acoustical Society of America 103 (1998) 64-72.

[23] S. van Ophem, O. Atak, E. Deckers, W. Desmet, Stable model order reduction for time-domain exterior vibro-acoustic finite element simulations, Computer Methods in Applied Mechanics and Engineering 325 (2017) 240-264.

[24] D. Bizzarri, O. Atak, S. van Ophem, H. Bériot, T. Tamarozzi, P. Jiranek, L. Scurria, A. Garcia de Miguel, M. Alvarez Blanco, K. Janssens, W. Desmet, Model order reduction and smart virtual sensing for unbounded vibroacoustics using high order fem and infinite elements, Proceedings of ISMA/USD 2022 (2022).

[25] A. van de Walle, The power of model order reduction in vibroacoustics: And its applications in model-based sensing, Ph.D. thesis, KU Leuven, 2018.

[26] S. van Ophem, Novel reduction techniques for exterior vibro-acoustic models and their use in model-based sensing and identification (2019).

[27] S. van Ophem, B. Forrier, D. Bizzarri, O. Atak, A. de Miguel, M. Elkafafy, M. Dal Borgo, T. Tamarozzi, M. Alvarez Blanco, K. Janssens, et al., Physics-based virtual acoustic sensing for enhanced direct field acoustic excitation testing, Proceedings of ISMA/USD 2022 (2022).

[28] R. Astley, J. Hamilton, The stability of infinite element schemes for transient wave problems, Computer methods in applied mechanics and engineering 195 (2006) 3553-3571.

[29] R. Holford, A multipole expansion for the acoustic field exterior to a prolate or oblate spheroid, J. Acoust. Soc. Am., submitted (1998).

[30] R. Astley, Mapped spheroidal wave-envelope elements for unbounded wave problems, International Journal for Numerical Methods in Engineering 41 (1998) 1235-1254.

[31] R. Astley, Transient spheroidal elements for unbounded wave problems, Computer methods in applied mechanics and engineering 164 (1998) 3-15.

[32] R. Astley, Infinite elements for wave problems: a review of current formulations and an assessment of accuracy, International Journal for Numerical Methods in Engineering 49 (2000) 951-976.

[33] R. Astley, J.-P. Coyette, The performance of spheroidal infinite elements, International Journal for Numerical Methods in Engineering 52 (2001) 1379-1396.

[34] L.-X. Li, S. Kunimatsu, J.-S. Sun, H. Sakamoto, A new conjugated mapped infinite element, Journal of Computational Acoustics 12 (2004) 543-570.

[35] D. Dreyer, O. von Estorff, Improved conditioning of infinite elements for exterior acoustics, International Journal for Numerical Methods in Engineering 58 (2003) 933-953.

[36] C. B. Barber, D. P. Dobkin, H. Huhdanpaa, The quickhull algorithm for convex hulls, ACM Transactions on Mathematical Software (TOMS) 22 (1996) 469-483.

[37] Siemens industry software simcenter nastran user's guide (version 2022.1), https://docs.sw.siemens.com/en-US/doc/289054037/ PL20201105151514625.xid1853788/xid1853789, 2022.

[38] R. J. Astley, Infinite elements, in: Computational Acoustics of Noise Propagation in Fluids-Finite and Boundary Element Methods, Springer, 2008, pp. 197-230.

[39] R. Astley, G. Macaulay, J. Coyette, Mapped wave envelope elements for acoustical radiation and scattering, Journal of Sound and Vibration 170 (1994) 97-118.

[40] C. H. Wilcox, A generalization of theorems of rellich and atkinson, Proceedings of the American Mathematical Society 7 (1956) 271-276.

[41] O. Zaleski, W.-C. von Karstedt, O. von Estorff, Zur modellierung mit boundary elementen und finiten elementen bei schallabstrahlungsberechnungen. 1, in: Deutschsprachige Anwender-Konferenz SYSNOISE, Bühlerhöhe, 1999.

[42] D. Dreyer, S. Petersen, O. von Estorff, Effectiveness and robustness of improved infinite elements for exterior acoustics, Computer Methods in Applied Mechanics and Engineering 195 (2006) 3591-3607.

[43] R. Astley, J. Hamilton, Numerical studies of conjugated infinite elements for acoustical radiation, Journal of Computational Acoustics 8 (2000) 1-24.

[44] D. Dreyer, Efficient infinite elements for exterior acoustics, Shaker, 2004.

[45] K. Gerdes, A review of infinite element methods for exterior helmholtz problems, Journal of Computational Acoustics 8 (2000) 43-62.

[46] J. Cipolla, Acoustic infinite elements with improved robustness, in: Proceedings of ISMA, 2002, pp. 2181-2187.

[47] H. Bériot, A. Modave, An automatic perfectly matched layer for acoustic finite element simulations in convex domains of general shape, International Journal for Numerical Methods in Engineering 122 (2021) 1239-1261.

[48] H. Bériot, A. Prinn, G. Gabard, Efficient implementation of high-order finite elements for helmholtz problems, International Journal for Numerical Methods in Engineering 106 (2016) 213-240.

[49] H. Bériot, G. Gabard, Anisotropic adaptivity of the p-fem for timeharmonic acoustic wave propagation, Journal of Computational Physics 378 (2019) 234-256.

[50] J. Biermann, O. von Estorff, S. Petersen, C. Wenterodt, Higher order finite and infinite elements for the solution of helmholtz problems, Computer Methods in Applied Mechanics and Engineering 198 (2009) 1171-1188.

[51] C. Geuzaine, J.-F. Remacle, Gmsh: A 3-d finite element mesh generator with built-in pre-and post-processing facilities, International journal for numerical methods in engineering 79 (2009) 1309-1331.

[52] D. Leykekhman, Math 3795: Introduction to computational mathematics, 2008.

A few options are disclosed in the literature to numerically model transient (vibro-) acoustics wave propagation phenomena in unbounded domains; the most popular techniques include:

- modelling the exterior domain using infinite elements and
- perfectly matched layers [PML].

PML is a technique used in computational acoustics to model the behavior of sound waves in unbounded regions. The PML was originally developed for use in electromagnetic simulations.

The PML technique involves constructing a layer around the computational domain that gradually absorbs the waves as they propagate away from the domain. This layer is designed to mimic the properties of an infinite medium, effectively eliminating reflections, and preventing wave leakage into the surrounding space.

At continuous level, no reflections take place at the interface between the FEM and the exterior domain, for any angle of incidence [3]. Various PML formulations for time domain simulations exist [10; 7; 5].

However, there are several problems associated with such transient PML formulations:

a) To make the system matrices frequency independent, new auxiliary variables are introduced in the PML layer. This means that for transient calculations the number of (degrees of freedom) DOFs is considerably larger than corresponding frequency-domain simulations. This leads to large time and memory requirements to build the ROMs.

b) These formulations are usually quite complex, and difficult to implement in a simulation software.

c) The stability analysis of many of the formulations presented in literature is not easy to carry out and each formulation requires a separate inspection [5]. For the formulation presented in [10], some terms need to be suppressed to stabilize transient simulations, introducing new approximation errors.

d) From [26], it is known in the context of model order reduction (MOR), to guarantee that stability properties are preserved after the projection step, that it is necessary to use a split-basis approach, which results in larger reduced order models. In a numerical experiment, analyzing a plate radiating in the free field, the author compared the efficiency of the PML and infinite elements for time-domain MOR: he showed that infinite elements resulted in a smaller full order model (making the reduction procedure faster) and that the number of DOFs in the final ROM was 3 times smaller than the one obtained from the PML configuration. The added DOFs lead to larger calculation time for the PML formulation.

Several model order reduction (MOR) techniques are known in the field of engineering and applied mathematics. Here are some of the most common techniques:

1. Proper Orthogonal Decomposition (POD) - This technique reduces the dimensionality of a system by identifying the most important modes of variation in the system using a statistical method. It is often used in fluid dynamics, structural mechanics, and other fields.
2. Balanced Truncation - This technique reduces the dimensionality of a system by balancing the energy of the system between its inputs and outputs. It is often used in control systems and linear systems.
3. Krylov Subspace Methods - This technique reduces the dimensionality of a system by approximating the system's response using a subspace of the Krylov sequence. It is often used in linear systems and control systems.
4. Model Reduction via Interpolation (MRI) - This technique reduces the dimensionality of a system by approximating the transfer function of the system using a set of interpolation points. It is often used in control systems, circuit simulation, and other fields.
5. Reduced Basis Methods - This technique reduces the dimensionality of a system by constructing a basis for the solution space of the system using a set of snapshot solutions. It is often used in finite element analysis, structural mechanics, and other fields.

These techniques are used to reduce the complexity of mathematical models and simulations, making them easier to solve and more computationally efficient. They are widely used in engineering, physics, and other fields to analyze and optimize complex systems and processes.

The Infinite Element Method (IFEM) is a popular alternative to the PML, particularly competitive for time domain models. The Astley-Leis infinite element formulation [20] leads to frequency independent system matrices and can be easily used for transient simulations. Two types of Astley-Leis formulations exist:

1. the standard Astley-Leis formulation [39] is based on the truncated multipole expansion written in spherical coordinates (the so-called Atkinson Wilcox expansion [40]);
2. the spheroidal formulation [28], on the other hand, is based on the truncated multipole expansion written in spheroidal coordinates.

Hereby the main difference between spherical and spheroidal coordinates is that spherical coordinates describe a point in terms of its distance from a fixed point and two angles, while spheroidal coordinates describe a point in terms of its distance from a fixed point and two angles that define its orientation relative to a more complex shape, like an ellipsoid.

Both formulations rely on a singular mapping between the infinite physical elements and the corresponding finite parent elements. For each infinite element, the distance from the so-called virtual source is mapped to a parent element radial coordinate; to form the shape functions, the usual polynomials written in parent coordinates are used. For the standard Astley-Leis formulation to accurately capture the correct solution, the virtual sources should coincide with the center of the smallest sphere circumscribing all the sound sources (also called center of radiation) in the problem analyzed. When this constraint is not met, the accuracy of the solution is not guaranteed.

In this context a parent element is a reference element that is used as a template to construct the finite element model of a physical domain. It may have a simple geometric shape, such as a triangle, quadrilateral, tetrahedron, or hexahedron.

The parent element is defined by a set of nodal points, or nodes, which are used to interpolate the solution within the element. The nodal points may be located at the vertices, edges, or faces of the parent element, and the solution is approximated by a polynomial or piecewise polynomial function that satisfies continuity and differentiability conditions.

The parent element may be transformed and mapped onto the physical domain using a set of geometric transformations, such as affine transformations or isoparametric mappings.

In this context, shape functions are mathematical functions used to interpolate the values of a field variable within each finite element.

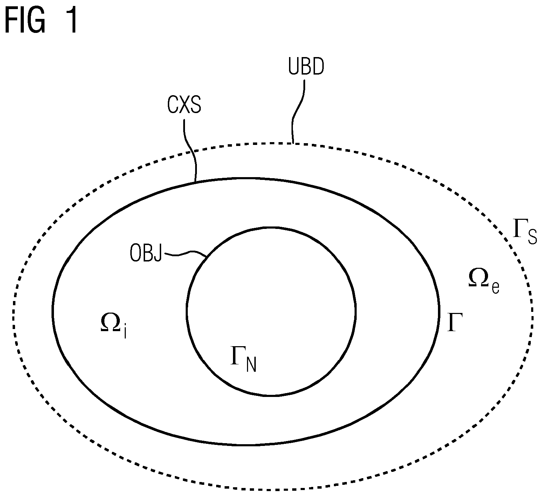

The use of the standard Astley-Leis formulation permits to use FEM domains of any convex shape for frequency-domain calculations. For transient simulations relying on such formulation, however, the infinite elements should be extruded orthogonally to the exterior FEM boundary envelope to guarantee the stability of the method [4]. This, together with the above-mentioned criterion on the positioning of the virtual sources, imposes to use a spherical truncation of the FEM domain. For the analysis of elongated scatterers in time domain, this means that an unnecessarily large mesh must be used, leading to prohibitive number of DOFs, as shown in Figure 1, when standard Astley-Leis infinite elements are used.

The spheroidal Astley-Leis formulation circumvents this issue, by allowing to fit a smaller FEM domain around the scatter.

In [32, 33] it was demonstrated that for such formulation the radial order of the shape functions often needs to be higher than for the standard Astley-Leis formulation, offsetting the benefits of using a smaller FEM domain.

It is therefore shown that the issue of automatically extruding the infinite elements has not yet been solved, it appears that is has not been addressed in prior literature.

A particularly challenging case is when only the FEM mesh is available and the geometry is not modelled with a CAD tool.

In this case, the geometric data needed to extrude the infinite elements need to be computed directly from the mesh of the FEM region. A version of the PML, called automatically matched layer (AML) has been reported in [47] for which the user must only provide the scatterer geometry (either a CAD model or a FEM mesh); then, the acoustic interior convex domain is generated automatically using the so called Quickhull Algorithm, which is known from [36] and the AML is extruded automatically during run time. The AML, however, is only available for frequency-domain simulations.

In this context the Quickhull algorithm is a computational geometry algorithm used to compute the convex hull of a set of points in a multi-dimensional space.

The convex hull of a set of points is the smallest convex polygon that encloses all the points in the set. In other words, it is the outermost boundary of the set of points. The Quickhull algorithm is a divide-and-conquer algorithm that recursively partitions the set of points into smaller subsets and finds the convex hull of each subset.

A divide-and-conquer algorithm is a well-known problem-solving strategy that involves breaking down a problem into smaller, more manageable sub-problems and solving each sub-problem separately. The solutions to the sub-problems are then combined to solve the original problem. Here the strategy is applied to the geometry problem as known from [36].

Hence, the challenge to numerically model transient (vibro-) acoustics wave propagation phenomena in unbounded domains is still open in the prior art.

## SUMMARY OF THE INVENTION

It is one object of the invention to improve the efficiency of numerically modelling transient (vibro-) acoustics wave propagation phenomena in unbounded domains.

To solve the problem the invention presents a method according to the independent claim. A computer-implemented method according to the incipiently mentioned type is proposed comprising the additional steps:

(c) Constructing a convex shape around said sound source using Quickhull algorithm,
(d) Extruding infinite elements starting from the convex shape,
(e) Transforming the coordinate system into a field variable coordinate system by mapping a radial coordinate of the coordinates to an auxiliary coordinate extending from the convex shape to the infinite elements,
(f) Constructing of the shape functions using the auxiliary coordinate,
(g) Determining the field variable by solving the model.

The basic idea of the invention is an infinite element formulation, which may be called the flexible infinite element, that can be used in combination with the Finite Element Method (FEM) to efficiently model the time domain propagation of sound waves in unbounded media. In particular, the new formulation addresses the challenge to make such transient unbounded vibroacoustic simulations very fast and compact, such that they can be used in Digital Twin scenarios, including applications where the simulations need to run close to real time.

The governing equations describing the physical behavior of sound waves can be written in frequency or in time domain. In frequency domain simulations, the input signal is represented as a sum of harmonic waves. By breaking down the signal into its individual frequency components, the steady-state pressure response at each frequency can be computed separately. On the other hand, time domain simulations (also called transient simulations) model sound waves as variations of pressure over time. For Digital Twin applications, time domain descriptions are prominent.

The problem of efficiently and accurately simulate the propagation of sound waves in unbounded domains has been widely researched in the past decades. The non-reflection condition can be modelled in various ways with the Finite Element Method (FEM), or alternatively with other numerical methods, such as the Boundary Element Method (BEM). The time domain version of BEM does not lend itself to easy building of Reduced Order Models (ROMs). Since such compact representations are needed in Digital Twin scenarios, the focus of the invention is on FEM.

Since FEM is a domain discretization method, modelling the infinite domains is not inherently possible. The FEM mesh must be truncated, and non-reflecting boundary conditions must be enforced on the exterior boundary, to prevent the acoustic waves from travelling back into the FEM domain.

This invention presents a novel flexible infinite element formulation. It is a unique method that allows the use of general convex-shaped envelopes for infinite elements, while being time-stable; its geometrical flexibility, makes it particularly attractive to simulate the sound scattered by elongated structures. It is also compatible with MOR techniques, because it has frequency independent system matrices. Therefore, it also allows compact representations.

Unlike existing formulations, which build the infinite elements shape functions based on a standard mapping between the distance from the virtual sources and the radial parent element coordinate, a new auxiliary mapping is introduced between the radial coordinate and a new auxiliary coordinate (see Figure 3). The usual parent element coordinates are used for the definition of the geometric interpolation, while the polynomials for the shape functions inside the infinite elements are expressed in terms of new auxiliary parent element coordinates, which consist of the standard parent element coordinates in the tangential directions and the new auxiliary coordinate in the radial direction, as shown in Figure 3. In this formulation, the shape functions closely mimic the truncated spherical multipole expansion, in any geometric configuration.

Therefore, the numerical scheme can provide accurate results, irrespective of the positioning of the mapping nodes in the infinite domain. As such, the new formulation is geometrically flexible, allowing to attach the infinite elements to general convex-shaped envelopes, without compromising the accuracy for transient simulations.

To guarantee the time stability of the flexible infinite element formulation, an accuracy-preserving stabilization procedure has been successfully developed.

According to the invention the Quickhull algorithm is used to generate the convex acoustic domain around any given scatterer, while the mapping nodes inside the infinite elements are extruded orthogonally to exterior FEM boundary at run time, with the normal directions computed using the same rules as in [12]. Thanks to the adopted strategy, the user intervention is kept to a minimum for the construction of the acoustic and exterior domain, even when no CAD of the scatterer geometry is available.

In addition, as the proposed method results in frequency independent system matrices, it can be easily combined with MOR methods such as Krylov based methods. This aspect, together with the geometric flexibility of the new formulation, unlocks new Digital Twin applications in the field of unbounded (vibro-) acoustics.

A preferred embodiment of the invention provides that in step (e) said auxiliary coordinate for positions outside of the convex shape is defined as:

$$v(s, t, \overline{v}) := 1 - \frac{2r_\Gamma^e(s, t)}{r^e(s, t, \overline{v})}$$

wherein:

$s, t, \overline{v}$ are 3-dimensional coordinates that parametrize said position external of the convex shape ($s, t$ are the tangential coordinates, $\overline{v}$ is the radial coordinate);

identifying the point on the border $\Gamma$ of the convex shape that is closest to said external position, $r_\Gamma^e$ is the distance between the center of radiation and this specific point on $\Gamma$;

$r^e(s, t, \overline{v})$ defines the distance between the center of radiation and said position;

$v(s, t, \overline{v})$ is the auxiliary coordinate.

This transformation enables a quick and accurate modelling and solving of the acoustics to determine the field variable within a reasonable time.

Another preferred embodiment provides displaying said field variable and/or key figures calculated from said field variable or images illustrating said field variable to a user. By default, the displaying uses a monitor as a human machine interface informing the user about the acoustic behavior of the object.

Another preferred embodiment comprises a step of providing said field variable to an iterative object design process of said object for designing said object with the design goal of improving acoustic emission.

Another preferred embodiment comprises a step of generating said object according to a design as determined by said iterative object design process. This generation may be done by any manufacturing or production method.

Said iterative object design may include step as:

- selecting at least one design parameter of said object (OBJ) design to be improved;
- providing an iteration abortion criterion as a threshold value for said field variable or a key figures calculated from said field variable;

- defining at least two variants (VRT) of said object (OBJ) differing in the selected design parameter;
- modelling the acoustics of said variants (VRT) according to the invention;
- selecting the best variants from the defined variants on the basis of the modelling results;
- repeating the steps of defining, modelling, selecting until the abortion criterion is met;
- selecting the design parameter of the variant which meets the abortion criterion;
- optionally select at least one different design parameter and process the same iteration as defined above for the newly selected at least one different design parameter.

This process is robust and efficient. Other iterative object design strategies may be applicable, too.

Furthermore, the invention relates to a computer product arranged and configured to execute the steps of the computer-implemented method according to the invention.

Furthermore, the invention relates to a computer-readable medium encoded with executable instructions, that when executed, cause the computer product defined above to carry out a method according to the invention.

Furthermore, the invention relates to a system for determining acoustic parameters of an object's emission, the system comprising at least one processor being prepared by upload of computer-executable code to perform a method according to the invention.

## 1. Introduction

The finite element method (FEM) is one of the most popular techniques to simulate the propagation of acoustic waves, as it allows to efficiently solve complicated problems, by discretizing the physical domain of interest. The simulation of wave fields in unbounded regions represents a challenge, because computers can only handle a finite number of elements. The simplest, but rather inaccurate, approach consists in applying an impedance boundary condition at the artificial boundary of the finite element domain [1]. High-order absorbing boundary conditions [2] and the perfectly matched layer (PML) [3] represent more accurate alternatives. In particular, the PML has been proven to be very efficient for the solution of wave problems in the frequency domain. The PML has also been extensively studied for transient applications (see [4]-[10] and references therein). However, for time-domain simulations, the PML requires the use of auxiliary variables; the resulting increase in the number of degrees of freedom (Dofs) makes the PML less attractive to simulate transient phenomena.

The infinite element method, introduced by Bettess and Zienkiewicz [11], avoids the issue of truncating the computational domain by employing special elements, which extend from the boundary of the FE domain to infinity. Over the years, different formulations have been proposed in the literature. In particular, two groups of formulations, which differ in the choice of the test function in the infinite domain, were developed: the unconjugated, where the test basis functions and the shape functions are the same, and the conjugated formulation, where the test basis functions are the complex conjugate of the shape functions. A detailed comparison of these different strategies is given in [12], where the advantages and disadvantages of both are analyzed in detail. The Astley-Leis formulation [13] differs from the classical conjugated formulation only by a weight factor that multiplies the test function, which is designed to cancel out the unbounded terms in the integrals that need to be computed to obtain the system matrices.

Alternatives exist also in terms of geometrical discretization of the infinite elements. The so-called mapped formulations rely on a mapping from the physical element to a parent element [13]-[16]: their main advantage is the geometrical flexibility, as they can be attached to arbitrary convex-shaped FE boundaries. By contrast, for Burnett elements [17]-[19], the geometry of the envelope is restricted to spheroids and no mapping is employed. Astley-Leis elements have several attractive properties. First, the system matrices integrals can be evaluated using standard quadrature rules, thanks to the weight factor used in the test function. Moreover, they result in frequency-independent system matrices and maintain the sparsity of the FEM system, which makes them readily available for time-domain simulations [20]-[22] and suitable for Model Order Reduction (MOR) [23]. This is particularly interesting, as in recent years MOR for transient simulations has emerged as one of the key technologies in a number of applications [24]-[27]. The aim of MOR techniques is to build Reduced Order Models (ROMs) which capture the most relevant dynamics of the corresponding initial Full Order Models (FOM), using only a fraction of the Dofs. In [26] a numerical test is presented, for which the performance of the transient formulation from Kaltenbacher et al. [10] is compared with the Astley-Leis infinite element formulation. In particular, it is shown that using the PML results in a larger number of Dofs, due to the presence of the auxiliary variables. Moreover, from a MOR perspective, it is necessary to use a split-basis approach, which results in tripling the number of Dofs of the final ROM, to guarantee time-domain stability preservation of the PML formulation after MOR. Since this performance comparison between the PML and the infinite element method is limited to a single numerical test, it is difficult to draw general conclusions. The study cited, however, seems to give a strong indication that using infinite elements for unbounded transient problems may be the best option, especially when MOR techniques are used.

Astley and Hamilton [28] showed that the Astley-Leis formulation is time-stable, provided that the infinite edges are aligned with the normal of the interface between the FEM and the exterior domain. However, the performance of traditional mapped infinite elements varies with the position of the virtual sources [14]; the mentioned stability requirements do not allow to freely choose the location of the virtual sources, and this often represents a problem for accuracy in transient analysis, when arbitrarily convex-shaped interior domains are analyzed. In practice, for most scenarios, this means that one should attached mapped Astley-Leis infinite elements only to spherical envelopes for transient simulations. Alternative mapped spheroidal infinite element formulations, based on the Holford expansion [29], have been proposed, both in the frequency and in the time domain [30], [31]. However, for such formulations, as well as for non-mapped spheroidal formulations [17]-[19], the benefits of a smaller interior domain may be nullified by the necessary increases in the radial order of the infinite element shape functions, as observed in [31], [32] and [33].

Li et al. [34] proposed an alternative conjugated mapped formulation, where radial shape functions of the Lagrangian type are modified, to satisfy exactly the truncated multipole expansion along the infinite edges, irrespective of the location of the virtual sources. However, they only addressed frequency-domain problems, where the standard Astley-Leis formulation already provides satisfactory results; moreover, being limited to radial shape functions derived from Lagrange polynomials, Li's elements have bad conditioning for high radial orders [35].

In this work, we propose a novel infinite element formulation for radial shape functions of any type, which satisfies exactly the truncated multipole expansion, irrespective of the orientation of the infinite edges. Consequently, we employ the new flexible infinite element to achieve a time-stable and accurate formulation, for arbitrarily convex shaped envelopes. The integration of the flexible infinite elements into an high-order software is discussed. A strategy is presented, to automatically extrude the infinite elements, when only a mesh of the interior domain is available. Additionally, we show how one can take advantage of the quickhull algorithm [36], implemented in the simulation package Simcenter 3D [37], developed by Siemens Industry Software, to automatically generate the envelope where the infinite elements are attached, around the scattering object. Finally, the combination of the proposed formulation with an existing MOR strategy is discussed. This article is structured as follows. In Section 2, the Helmholtz problem and the resulting system of equations in the time domain are introduced, together with a description of the standard Astley-Leis formulation. In Section 3 the novel flexible infinite element is presented and its stability properties are discussed. In Section 5 we demonstrate the effectiveness of the proposed method on two academic examples, while in Section 6 we consider a problem of industrial complexity. Finally, a conclusion is proposed in Section 7.

## 2. Finite and Infinite elements for acoustics

### 2.1. Problem statement

#### 2.1.1. Governing equation

We take the convention that the time-dependence of the fields is $e^{i\omega T}$, where $\omega$ is the angular frequency and $\tau$ is the time. The behavior of the pressure field $p$ in the unbounded domain $\Omega$ is described by the Helmholtz equation, in the frequency domain:

$$\nabla^2 p + k^2 p = 0 \quad \text{in } \Omega, \tag{1}$$

where $k$ is the wavenumber. The domain $\Omega$ is subdivided into an interior region $\Omega_i$ and an exterior region $\Omega_e$; we denote with $\Gamma$ the interface between the two domains (see Figure 1).

Figure 1: Exterior acoustic problem, schematic representation. $\Omega_i$ and $\Omega_e$ are the interior and the exterior domain, respectively. $\Gamma$ is the interface between the two domains and $\Gamma_S$ is the envelope where the Sommerfeld condition is imposed.

At the interior boundary $\Gamma_N$ of the domain $\Omega_i$ a Neumann boundary condition is prescribed. Dirichlet and Robin boundary conditions can be easily handled as well, but won't be considered here for ease of notation. The Sommerfeld condition states that no waves can be reflected at infinity, in mathematical terms, in a $d$ dimensional domain, this writes as:

$$r^{\frac{d-1}{2}}\left\{\frac{\partial p}{\partial r} + \mathrm{i}kp\right\} \to 0 \quad \text{as} \quad r \to \infty, \tag{2}$$

where $r$ is the spherical/cylindrical radius.

As in [38], approximating (2), we can rewrite:

$$\nabla_x p \cdot \boldsymbol{n} = -\mathrm{i}kp \quad \text{on} \quad \Gamma_S, \tag{3}$$

where $\nabla_x$ is the gradient operator in Cartesian coordinates, and $\Gamma_S$ is an envelope with outward unit normal $n$, placed at radial distance $R$ from the envelope $\Gamma$, with $R \to \infty$.

The corresponding boundary value problem reads as follows:

$$\begin{cases} \nabla^2 p + k^2 p = 0 \text{ in } \Omega \\ \nabla_x p \cdot \boldsymbol{n} = -\mathrm{i}\rho\omega v_n \text{ on } \Gamma_N \\ \nabla_x p \cdot \boldsymbol{n} = -\mathrm{i}kp \text{ on } \Gamma_S, \text{ for } R \to \infty, \end{cases} \tag{4}$$

where $\rho$ is the fluid density and $v_n$ is the prescribed normal velocity on $\Gamma_N$.

### 2.1.2. Variational formulation and discretization

Using the method of weighted residuals, we obtain the variational formulation:

$$\begin{vmatrix} \text{Find } p \in H^1(\Omega) \text{ such that, } \forall q \in H^1(\Omega) \\ \lim_{R \to \infty} \int_\Omega \left\{\nabla_x q \cdot \nabla_x p - k^2 qp\right\} \mathrm{d}\Omega + \mathrm{i}k \int_{\Gamma_S} \left\{qp\right\} \mathrm{d}\Gamma + \mathrm{i}\omega \int_{\Gamma_N} \left\{\rho q v_n\right\} \mathrm{d}\Gamma, \end{vmatrix} \tag{5}$$

where $H^1$ is the Sobolev space where the solution is sought.

Eq. (5) is solved by using $H^1$-conforming finite elements in $\Omega_i$ and attaching infinite elements to the envelope $\Gamma$. The field variable $p$ and the test function $q$ are approximated by $p^h \in V^h \subset H^1(\Omega)$ and $q^h \in Q^h \subset H^1(\Omega)$, where $V^h$ is the space of shape functions and $Q^h$ is the space of test functions. In the Astley-Leis formulation, thanks to the weight factor used in the test function, the Sommerfeld condition is automatically satisfied and does not need to be taken into account in the variational formulation [39]. In this case, the discrete variational formulation is:

$$\left| \begin{array}{l} \text{Find } p^h \in V^h \text{ such that, } \forall q^h \in Q^h \\ \lim_{R \to \infty} \int_{\Omega} \left\{ \nabla_x q^h \cdot \nabla_x p^h - k^2 q^h p^h \right\} \mathrm{d}\Omega + \mathrm{i}\omega \int_{\Gamma_{\mathrm{N}}} \left\{ \rho q^h v_n \right\} \mathrm{d}\Gamma, \end{array} \right. \tag{6}$$

which can be rewritten as a linear system of equations:

$$\left[ -\omega^2 \mathbf{M} + i\omega \mathbf{C} + \mathbf{K} \right] \boldsymbol{p}(\omega) = \boldsymbol{f}(\omega), \tag{7}$$

where $p$ is the vector of Dofs, $f$ is the forcing vector and M, C and K $\in \mathbb{R}^{n_{\mathrm{DOF}} \times n_{\mathrm{DOF}}}$ are the mass, damping and stiffness matrices, respectively and $n_{\mathrm{DOF}}$ is the number of Dofs. The exact formula for the system matrices can be found in [13].

Since, for the Astley-Leis formulation, the system matrices are frequency-independent, Eq. (7) can be readily transformed into the time domain:

$$\mathbf{M}\ddot{\boldsymbol{p}}_{\tau}(\tau) + \mathbf{C}\dot{\boldsymbol{p}}_{\tau}(\tau) + \mathbf{K}\boldsymbol{p}_{\tau}(\tau) = \boldsymbol{f}_{\tau}(\tau), \tag{8}$$

where $p_{\tau}$ and $f_{\tau}$ are the inverse Fourier transforms of $p$ and $f$, respectively.

### 2.1.3. Multipole expansion

The Atkinson-Wilcox theorem [40] states that at any point outside the smallest sphere circumscribing all the sound sources, the solution of problem (4) can be written as the multipole expansion:

$$p = e^{-\mathrm{i}kr} \sum_{n=1}^{\infty} \frac{G_n(\alpha, \theta, k)}{r^n} \tag{9}$$

where $G_n$ is the directivity function, $\alpha$ and $\theta$ are the spherical angles and $r$ is the radial distance, measured from the center of radiation, that coincides with the center of the minimal sphere. For ease of notation, throughout the rest of the paper, we will assume that the origin $O$ of the absolute Cartesian coordinate system coincides with the center of radiation.

The Atkinson-Wilcox theorem has been extended by Holford [29], to include the spheroidal case. By placing the envelope $\Gamma$ outside the minimal sphere (for the Atkinson-Wilcox expansion) or spheroid (for the Holford expansion), we ensure that the solution in the exterior domain $\Omega_e$ is composed only of outward propagating waves: this consideration is used to select a proper trial solution in the infinite elements.

The so-called spheroidal formulations have received some criticism in the past [32], [33], since the smaller number of Dofs in the FEM region is often counterbalanced, in practical applications, by the need for higher radial orders in the exterior region. On the other hand, numerical experiments have been performed in the frequency domain, using mapped infinite elements based on expansion (9), where the conditions of the Atkinson-Wilcox theorem were explicitly violated [41], [35], [42]: namely, non-spherical envelopes were used, partially lying inside the minimal enclosing sphere. Although the convergence of this approach has not been formally proven [43], numerical experiments with sufficiently smooth envelopes gave satisfactory results (see [44] for more details). For all the test cases encountered during our research, our observations were in line with the cited literature. These claims will be further expanded in Section 6.

### 2.2. Review of Astley-Leis infinite elements

In this subsection, we describe the main features of the Astley-Leis formulation and we analyze under which conditions it is stable in the time domain.

### 2.2.1. Geometrical interpolation

The Astley-Leis formulation relies on a mapping from the infinite physical element to a finite parent element. In particular, in two dimensions (see

Physical element                                    Parent element

○ Virtual sources

● Mapping nodes

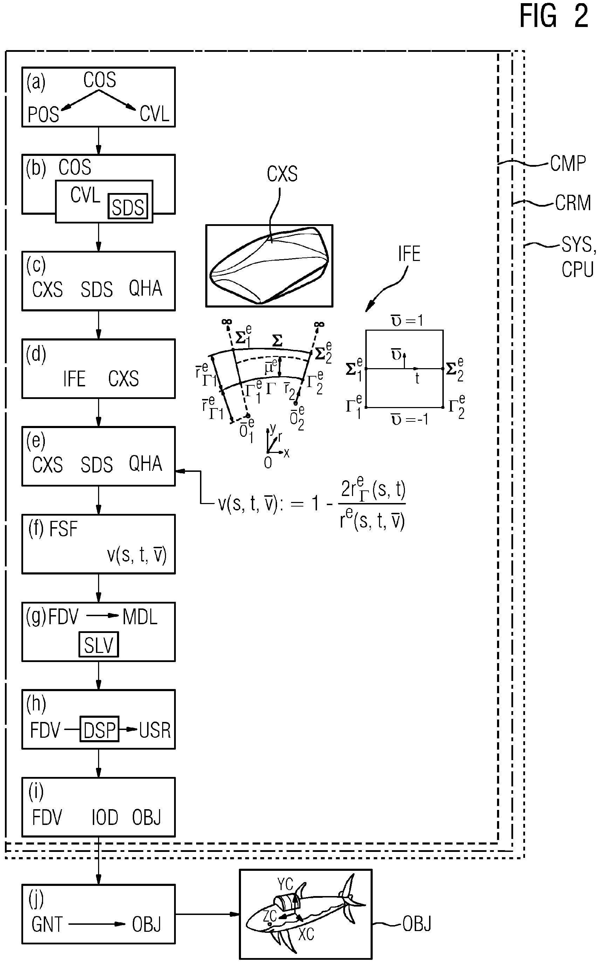

Figure 2: Schematic representation of a mapped infinite element. In our convention, the center of radiation coincides with the origin $O$ of the Cartesian coordinates system.

Figure 2), the physical element is mapped to a quadratic parent element ($t$, $\bar{v} \in$ [-1, 1]); in three dimensions, the parent element can be a triangular prism or a cube, depending on the shape of the corresponding physical element, and the parent element coordinates are named $s$, $t$ and $\bar{v}$. The symbol $\bar{\cdot}$ is introduced for all the variables that are related to the concept of virtual sources (see later in this section how the virtual sources are defined). In particular, the link between the parent element radial coordinate $\bar{v}$ and the distance from the virtual sources in the physical space will become clear after the introduction of the radial mappings (16) and (24).

In Figure 2, we represent schematically a mapped infinite element in two dimensions, showing both the physical and the parent element. For the $i$-th node $\Gamma_i^e$, whose location is defined during the meshing process of the interior domain, on the envelope $\Gamma$ (at the interface between the exterior and the interior domain), in the the $e$-th infinite element, the user defines the location of a mapping node $\Sigma_i^e$ in the exterior domain, with Cartesian coordinates:

$$x_{\Sigma_i}^e = \left( x_{\Sigma_i}^e, y_{\Sigma_i}^e, z_{\Sigma_i}^e \right). \qquad (10)$$

Similarly, we write the Cartesian coordinates of the mapping node $\Gamma_i^e$ on $\Gamma$ as:

$$x_{\Gamma_i}^e = \left( x_{\Gamma_i}^e, y_{\Gamma_i}^e, z_{\Gamma_i}^e \right). \qquad (11)$$

The $i$-th infinite edge is the line originating from node $\Gamma_i^e$, passing through node $\Sigma_i^e$ and extending to infinity (see Figure 2). For all the nodes on $\Gamma$, an infinite edge is defined.

We denote with $\bar{r}_{\Gamma_i}^e$ the distance between the mapping nodes $\Sigma_i^e$ and $\Gamma_i^e$ :

$$\bar{r}_{\Gamma_i}^e := \left\| x_{\Sigma_i}^e - x_{\Gamma_i}^e \right\|, \qquad (12)$$

where $\|\cdot\|$ is the Euclidean norm. The virtual source $\bar{O}_i^e$, with Cartesian coordinates:

$$x^e_{O_i} = \left( x^e_{O_i}, y^e_{O_i}, z^e_{O_i} \right), \qquad (13)$$

is located (see Figure 2) along the direction of the *i*-th infinite edge, towards the interior domain, at distance $\overline{r}^e_{\Gamma_i}$ from $\Gamma^e_i$:

$$\left\| x^e_{\Gamma_i} - x^e_{O_i} \right\| := \overline{r}^e_{\Gamma_i}. \qquad (14)$$

As a consequence, the distance $\overline{r}^e_{\Sigma_i}$ between the virtual source $\overline{O}^e_i$ and the mapping node in the exterior domain $\Sigma^e_i$ is:

$$\overline{r}^e_{\Sigma_i} := \left\| x^e_{\Sigma_i} - x^e_{O_i} \right\| = 2\overline{r}^e_{\Gamma_i}. \qquad (15)$$

The envelope E is the union of all points, in the physical space, whose parent element radial coordinate is $\overline{v} = 0$. For any point on the infinite edge, the distance $\overline{r}^e_i$ from the virtual source is mapped to the parent element radial coordinate $\overline{v}$:

$$\overline{r}^e_i(\overline{v}) := \frac{2\overline{r}^e_{\Gamma_i}}{1 - \overline{v}}. \qquad (16)$$

Notice that, with this mapping definition, we have

$$\begin{cases} \overline{r}^e_i(\overline{v}) = \overline{r}^e_{\Gamma_i} \text{ at } \overline{v} = -1 \\ \overline{r}^e_i(\overline{v}) = \overline{r}^e_{\Sigma_i} \text{ at } \overline{v} = 0 \\ \overline{r}^e_i(\overline{v}) \to \infty \text{ for } \overline{v} \to 1. \end{cases} \qquad (17)$$

The interpolated distance $\overline{r}^e_\Gamma$ between the mapping nodes on Γ and their respective virtual sources is defined as:

$$\overline{r}^e_\Gamma(s,t) := \sum_{i=1}^{n} N^i_t(s,t)\overline{r}^e_{\Gamma_i}, \qquad (18)$$

where *n* is the number of mapping nodes on the envelope Γ, in the *e*-th infinite element, and $N^i_t$ are the standard tangential geometrical mapping functions (in our case, we use Lagrangian polynomials). Similarly, the interpolated distance $\overline{r}^e_\Sigma$ between the mapping nodes on the envelope E and their respective virtual sources is defined as:

$$\overline{r}^e_\Sigma(s,t) := \sum_{i=1}^{n} N^i_t(s,t)\overline{r}^e_{\Sigma_i}. \qquad (19)$$

By substiuting eq. (15) in (19), we obtain:

$$\overline{r}^e_{\Sigma}(s,t) = \sum_{i=1}^{n} N_t{}^i(s,t) 2\overline{r}^e_{\Gamma_i} = 2\sum_{i=1}^{n} N_t{}^i(s,t)\overline{r}^e_{\Gamma_i}. \qquad (20)$$

By then substituting (18) in (20), we obtain:

$$\overline{r}^e_{\Sigma}(s,t) = 2\overline{r}^e_{\Gamma}(s,t). \qquad (21)$$

The interpolated distance between the mapping nodes in the element c and their corresponding virtual sources is defined as:

$$\overline{r}^e(s,t,\overline{v}) := N^{\Gamma}_{\overline{v}}(\overline{v})\,\overline{r}^e_{\Gamma}(s,t) + N^{\Sigma}_{\overline{v}}(\overline{v})\,\overline{r}^e_{\Sigma}(s,t), \qquad (22)$$

where $N^{\Gamma}_{\overline{v}}(\overline{v})$ and $N^{\Sigma}_{\overline{v}}(\overline{v})$ are the radial geometrical mapping functions, defined as:

$$N^{\Gamma}_{\overline{v}}(\overline{v}) := \left(-\frac{2\overline{v}}{1-\overline{v}}\right), \quad N^{\Sigma}_{\overline{v}}(\overline{v}) := \left(\frac{1+\overline{v}}{1-\overline{v}}\right). \qquad (23)$$

By substituting (23) and (21) in (22), we finally obtain:

$$\overline{r}^e(s,t,\overline{v}) = \left(\frac{2\,\overline{r}^e_{\Gamma}(s,t)}{1-\overline{v}}\right). \qquad (24)$$

In other words, a mapping between the physical coordinate $\overline{r}^e$ and the radial parent element coordinate $\overline{v}$ is obtained for any point inside the infinite element, whereas (16) is valid only along the i-th infinite edge. The fact that the parent element radial coordinate $\overline{v}$ is mapped to the interpolated distance from the virtual sources in the e-th infinite element, explains the relationship between $\overline{v}$ and the concept of virtual sources, and therefore justifies the use of the symbol $\bar{\cdot}$ for the parent element radial coordinate. Notice that, with this mapping, we obtain:

$$\begin{cases} \overline{r}^e(s,t,\overline{v}) = \overline{r}^e_{\Gamma}(s,t) \text{ at } \overline{v} = -1 \\ \overline{r}^e(s,t,\overline{v}) = \overline{r}^e_{\Sigma}(s,t) \text{ at } \overline{v} = 0 \\ \overline{r}^e(s,t,\overline{v}) \to \infty \text{ for } \overline{v} \to 1. \end{cases} \qquad (25)$$

This mapping is consistent with the notion that points with parent element radial coordinate $\overline{v}$ = -1 lie on the envelope Γ in the physical space (see Figure 2), points with $\overline{v}$ = 0 lie on E and points with $\overline{v} \to 1$, are at a radial approaching infinity from the interior domain. Furthermore, along the i-th infinite edge, we have:

$$\overline{r}^e(s,t,\overline{v}) = \overline{r}^e_i(\overline{v}). \qquad (26)$$

The vector of Cartesian coordinates for a point inside the e-th infinite element is found by interpolating the nodal Cartesian coordinates:

$$\boldsymbol{x}^e(s,t,\overline{v}) := N^{\Gamma}_{\overline{v}}(\overline{v}) \sum_{i=1}^{n} N_t{}^i(s,t)\boldsymbol{x}^e_{\Gamma_i} + N^{\Sigma}_{\overline{v}}(\overline{v}) \sum_{i=1}^{n} N_t{}^i(s,t)\boldsymbol{x}^e_{\Sigma_i}, \qquad (27)$$

where $\boldsymbol{x}^e_{\Gamma_i}$ and $\boldsymbol{x}^e_{\Sigma_i}$ are the vectors of Cartesian coordinates at the mapping nodes on the i-th infinite edge.

We emphasize that the notation adopted here is slightly different from what is usually found in the literature, because we want to distinguish between r as defined in Section 2.1.3 (e.g. the distance from the center of radiation) and $\overline{r}$,

the interpolated distance between the mapping nodes and their respective virtual sources, defined in (22). In particular, since we take the convention that the origin $O$ of the Cartesian coordinate system coincides with the center of radiation, $r^e$, representing the distance between the points in the $e$-th infinite element and the center of radiation, can be written as:

$$r^e(s, t, \overline{v}) = \left\| \boldsymbol{x}^e(s, t, \overline{v}) \right\|. \qquad (28)$$

Additionally, we define $r_i^e = r_i^e(\overline{v})$ as the distance between any point on the i-th infinite edge and the center of radiation $O$.

Finally, the so-called phase distance $\overline{\mu}^e$ is defined as:

$$\overline{\mu}^e(s, t, \overline{v}) := \overline{r}^e(s, t, \overline{v}) - \overline{r}_{\Gamma}^e(s, t). \qquad (29)$$

When the infinite edges are extruded orthogonally to $\Gamma$, the phase distance $\overline{\mu}^e(s, t, \overline{v})$ represents the distance between the point with physical coordinates $x^e(s, t, \overline{v})$ and the envelope $\Gamma$, as represented in Figure 2.

*2.2.2. Shape and test functions*

By analogy with the Atkinson-Wilcox expansion (9), the field shape functions are written as:

$$\phi(s, t, \overline{v}) = \boldsymbol{\psi}(s, t, \overline{v}) \exp\left[-\mathrm{i}k\overline{\mu}^e\right], \qquad (30)$$

where $\psi(s, t, \overline{v})$ is the usual vector of polynomial shape functions used in the FE domain. As an example, let's consider the first order Lagrange polynomials in two dimensions, for ease of notation:

$$\boldsymbol{\psi}(t, \overline{v})^{\top} = \begin{pmatrix} \frac{1-t}{2} \frac{1-\overline{v}}{2} \\ \frac{1+t}{2} \frac{1-\overline{v}}{2} \\ \frac{1-t}{2} \frac{1+\overline{v}}{2} \\ \frac{1+t}{2} \frac{1+\overline{v}}{2} \end{pmatrix} \qquad (31)$$

By inserting the radial mapping (24) in (31), it can be verified that the following relationship holds:

$$\left\{ \frac{1}{\overline{r}^e} \right\} \subseteq \mathrm{colsp}\left\{ \boldsymbol{\psi} \right\}, \qquad (32)$$

Extending the above argument to higher order polynomials in three dimensions, we obtain:

$$\mathrm{colsp}\left\{ \left[ \left(\frac{1}{\overline{r}^e}\right), \left(\frac{1}{\overline{r}^e}\right)^2, ..., \left(\frac{1}{\overline{r}^e}\right)^m \right] \exp\left[-\mathrm{i}k\overline{r}^e\right] \right\} \subseteq \mathrm{colsp}\left\{ \boldsymbol{\phi} \right\}, \qquad (33)$$

where $m$ is the selected radial order in the infinite domain. In particular, along the $i$-th infinite edge, we have

$$\mathrm{colsp}\left\{ \left[ \left(\frac{1}{\overline{r}_i^e}\right), \left(\frac{1}{\overline{r}_i^e}\right)^2, ..., \left(\frac{1}{\overline{r}_i^e}\right)^m \right] \exp\left[-\mathrm{i}k\overline{r}_i^e\right] \right\} \subseteq \mathrm{colsp}\left\{ \boldsymbol{\phi} \right\}, \qquad (34)$$

In other words, for the $i$-th infinite edge, the pressure field generated by the $m$-th order virtual multipole source, placed at $\overline{O}_i$, belongs to the space of the shape functions. This is where the idea of virtual sources come from.

An interesting case to analyze is when all the virtual sources of the $e$-th infinite element coincide with the center of radiation $O$. In this case, along the $i$-th infinite edge, we obtain:

$$\mathrm{colsp}\left\{\left[\left(\frac{1}{r^e}\right),\left(\frac{1}{r^e}\right)^2,...,\left(\frac{1}{r^e}\right)^m\right]\exp\left[-\mathrm{i}kr^e\right]\right\}\subseteq\mathrm{colsp}\left\{\boldsymbol{\phi}\right\},\qquad(35)$$

since $\bar{r}^e = r^e$ along the i-th infinite edge, when $\overline{O}_i^e \equiv O$ . In other words, when all the virtual sources coincide with the center of radiation, the approximated field variable $p^h$ can mimic the multipole expansion (9), truncated at the radial order $m$, along the infinite edges, ensuring good accuracy of the approximation. In all other cases, relationship (35) is not necessarily true. This explains why, for traditional mapped infinite element formulations, the accuracy depends on the location of the virtual sources. Moreover, inside the $e$-th infinite element, we have, in general:

$$\overline{r}^e \neq r^e,\qquad\qquad(36)$$

even when all the virtual sources coincide with the center of radiation. This comes from the fact that in (22) $\bar{r}^e$ is found using the same interpolating functions used to obtain the vector of Cartesian coordinates $x^e$ in (27); the radial distance $r^e$ is not, however, a linear combination of the Cartesian coordinates, so it cannot be found by interpolating the nodal values, using the same interpolating functions used for the Cartesian coordinates. Consider, as an example, an infinite element for which the inner surface is a circular arc, discretized with linear elements, as depicted in Figure 3. Both virtual sources, relative to nodes $\Gamma_1$ and $\Gamma_2$, coincide with the center of the arc. This means that the radial distance $\bar{r}_{\Gamma_1}$ between $\Gamma_1$ and the virtual source $\overline{O}_1$ coincides with the radius of the circular arc; the same holds true for $\bar{r}_{\Gamma_2}$. When computing $\bar{r}_{\Gamma}$, according to the standard interpolation of the nodal values $\overline{r}_{\Gamma_1}^e$ and $\overline{r}_{\Gamma_2}^e$, using formula (18), we obtain $\overline{r}_{\Gamma}^e = \overline{r}_{\Gamma_1}^e = \overline{r}_{\Gamma_2}^e$. However, for points inside the infinite element. along the discrete approximation $\Gamma^h$ of the envelope $\Gamma$, the distance form the center of the circular arc is not $\overline{r}_{\Gamma_1}^e$. This situation is equivalent to defining an interpolated virtual source location, for points on $\Gamma^h$, at distance $\overline{r}_{\Gamma_1}^e$ from the envelope $\Gamma$, along the radial direction (see Figure 3). In other words, when using the interpolation formulas (18) and (22) to compute $\overline{r}_{\Gamma}^e$ and $\bar{r}^e$, the interpolated locations of the virtual sources do not coincide with the center of the arc $O$. This means

○ Virtual sources

◉ Interpolated virtual source

Figure 3: Schematic representation of an infinite element. The envelope $\Gamma$ is a circle and it is discretized with piecewise linear envelope $\Gamma^h$. The virtual sources relative to the nodes $\Gamma_1$ and $\Gamma_2$ coincide with the center of the arc $O$. The interpolated virtual source relative to the other points on $\Gamma^h$ do not coincide with the center of the arc $O$.

that relationship (35) is valid, in general, only along the infinite edges, even when the virtual sources relative to all the infinite edges coincide with the center of radiation. The effect of this fact on the quality of the approximation will be analyzed in Section 5.1.1.

In the Astley-Leis formulation, a Petrov-Galerkin approach is taken: the test function and the solution function belong to different function spaces; in particular, the test basis functions are the complex conjugate of the shape functions, multiplied by a weight factor $\omega$:

$$\widetilde{\phi} = w\psi e^{+\mathrm{i}k\overline{\mu}}, \tag{37}$$

where the weight factor takes the form:

$$w = \left(\frac{1-\overline{v}}{2}\right)^{p_w}. \tag{38}$$

In contrast to the Bubnov-Galerkin method, where the test basis functions are equal to the shape functions, the Petrov-Galerkin method results in unsymmetric system matrices. However, this choice for the test basis functions is particularly convenient: firstly, being a conjugated formulation, the Astley-Leis formulation results in frequency-independent system matrices, which can be then readily used in the time domain; secondly, for $p_\omega > 2$, standard quadrature rules can be used for the evaluation of the integrals necessary to compute the system matrices. In [39] the choice of $p_\omega = 2$ is justified on physical grounds, although it is pointed out that any power $p_\omega > 2$ preserves the boundedness of the system matrices integrals. Irrespective of the choice of $p_\omega$, the conjugated weighted formulation was shown to lead to a variational formulation in weighted Sobolev spaces, for which existence and uniqueness of the solution has been proven [12], [45].

*2.a. Review of conditions for stability*

In this subsection, we analyze the conditions under which the Astley-Leis formulation is stable. This analysis is an extension to the theory developed from Astley and Hamilton [28]. In particular, in Section 3.5 of [28], only the system matrices relative to the infinite elements were considered: here, by contrast, we include the case where the interior domain is discretized with finite elements. Moreover, in Section 3.5 of [28] only the case where the inner surface of the infinite element is an arc of a circle was inspected; in this subsection, we extend the analysis to arbitrary convex shapes. Additionally, to guarantee stability, we will show that it is not necessary to construct "zero-mass" elements, but it is sufficient to require that the element mass matrices relative to the infinite domain are positive semi-definite.

As stated in [46] the second-order system (8) is stable, provided that the damping, stiffness and mass matrices are positive semi-definite. A matrix $\mathbf{A} \in \mathbb{R}^{n_{\mathrm{A}} \times n_{\mathrm{A}}}$ is defined positive semi-definite when

$$a^\top \mathbf{A} a \geq 0, \ \forall a \in \mathbb{R}^{n_{\mathrm{A}}}. \tag{39}$$

For the sake of brevity, we will adopt $A \geq 0$ as a shorthand notation to indicate positive semi-definiteness of the matrix A. Because of the infinite elements' contribution, the mass matrix may not always be positive semi-definite, causing the system to become unstable.

First of all, we show that , if the mass matrix relative to the infinite domain, $\mathbf{M}_{\mathrm{IE}} \in \mathbb{R}^{n_{\mathrm{IE}} \times n_{\mathrm{IE}}}$ (where $n_{\mathrm{IE}}$ is the number of Dofs associated with the infinite elements) is positive semi-definite, then the global mass matrix M is also positive semi-definite. Let's consider a generic vector $y \in \mathbb{R}^{n_{\mathrm{DOF}}}$:

$$y^\top \mathbf{M} y = y_{\mathrm{FE}}^\top \mathbf{M}_{\mathrm{FE}} \, y_{\mathrm{FE}} + y_{\mathrm{IE}}^\top \mathbf{M}_{\mathrm{IE}} \, y_{\mathrm{IE}} \geq 0, \tag{40}$$

where the subscripts $_{\mathrm{FE}}$ and $_{\mathrm{IE}}$ denote the Dofs associated with the finite and the infinite elements, respectively; the last inequality in (40) comes from the fact that $M_{\mathrm{IE}} \geq 0$ by hypothesis and $M_{\mathrm{FE}} \geq 0$ when standard polynomial shape functions are used and the material properties of the medium in which sound propagates are physically realizable.

Next, we show that $M_{\mathrm{IE}} \geq 0$, provided that the element mass matrix $\mathbf{M}_{\mathrm{IE}}^{e} \in \mathbb{R}^{n_{\mathrm{IE}}^{e} \times n_{\mathrm{IE}}^{e}}$ is positive semi-definite for all the infinite elements. Let's consider a generic vector $y_{\mathrm{IE}} \in \mathbb{R}^{n_{\mathrm{IE}}}$:

$$y_{\mathrm{IE}}{}^\top \mathrm{M}_{\mathrm{IE}} y_{\mathrm{IE}} = y_{\mathrm{IE}}^1{}^\top \mathrm{M}_{\mathrm{IE}}^1 \, y_{\mathrm{IE}}^1 + \dots + y_{\mathrm{IE}}^{n_{\mathrm{E}}}{}^\top \mathrm{M}_{\mathrm{IE}}^{n_{\mathrm{E}}} \, y_{\mathrm{IE}}^{n_{\mathrm{E}}} \geq 0, \qquad (41)$$

where $n_{\mathrm{E}}$ is the number of infinite elements and the inequality comes from the fact that $\mathrm{M}_{\mathrm{IE}}^e \geq 0$ by hypothesis, with $e = 1, \dots, n_{\mathrm{E}}$.

We now analyze under which conditions $\mathrm{M}_{\mathrm{IE}}^e \geq 0$. In the Astley-Leis formulation, when the test basis functions are taken as the weighted complex conjugate of the shape functions, $\mathrm{M}_{\mathrm{IE}}^e$ takes the form (see [13]):

$$\mathrm{M}_{\mathrm{IE}}^e = \int_{\Omega^e} \left\{ \frac{1}{c^2} w \psi^\top \psi \left[ 1 - \|\nabla_x \overline{\mu}^e\| \right] \right\} \mathrm{d}\Omega, \qquad (42)$$

where $c$ is the speed of sound. To make it easier to analyze its definiteness, we rewrite it to a much simpler form. In particular, when using Gauss quadrature formulas to perform the integration, expression (42) can be rewritten as

$$\mathrm{M}_{\mathrm{IE}}^e = \Psi_{\mathbf{g}}{}^\top \mathrm{D}^e \Psi_{\mathbf{g}}, \qquad (43)$$

where $\Psi_{\mathbf{g}} \in \mathbb{R}^{n_{\mathrm{IE}}^e \times n_g}$ is the matrix of polynomial functions, evaluated at the Gauss points:

$$\Psi_{\mathbf{g}} := \begin{pmatrix} \psi(g_1) \\ \vdots \\ \psi(g_{n_g}) \end{pmatrix}, \qquad (44)$$

$n_g$ is the number of Gauss points, $g_j = \left( s_j^g, t_j^g, \overline{v}_j^g \right)$, is the vector of parent element coordinates of the $j$-th Gauss point and $\mathrm{D}^e$ is a diagonal matrix, whose $j$-th component along the diagonal is

$$\mathrm{D}_{jj}^e = \frac{1}{c^2} g_j^w \cdot \det J_j \left[ 1 - \|\nabla_x \overline{\mu}^e(g_j)\| \right] w(g_j), \qquad (45)$$

where $g_j^w$ is the $j$-th Gauss weight and $\det J_j$ is the determinant of the Jacobian of the transformation between physical and parent element coordinates, evaluated at the $j$-th Gauss point.

Since $\mathrm{D}^e$ is a diagonal matrix, it is positive semi-definite if and only if all its components are not smaller than zero. This happens if and only if

$$\|\nabla_x \overline{\mu}^e(g_j)\| \leq 1 \; \forall i, i = 1, \dots, n_g. \qquad (46)$$

We show that if $\mathrm{D}^e \geq 0$ then $\mathrm{M}_{\mathrm{IE}} \geq 0$. Let's choose a generic vector $y \in \mathbb{R}^n$:

$$y^\top \mathrm{M}_{\mathrm{IE}} y = y^\top \left( \Psi_{\mathbf{g}}{}^\top \mathrm{D}^e \Psi_{\mathbf{g}} \right) y = \left( \Psi_{\mathbf{g}} y \right)^\top \mathrm{D}^e \left( \Psi_{\mathbf{g}} y \right) = z^\top \mathrm{D}^e z \geq 0, \qquad (47)$$

where the last inequality in (47) comes from the fact that $\mathrm{D}^e \geq 0$ by hypothesis, with $z = \Psi_{\mathbf{g}} y \in \mathbb{R}^{n_g}$. It follows that if $\|\nabla_x \overline{\mu}\| \leq 1$ for any point within the infinite elements, the second-order system (8) is guaranteed to be time stable.

Let's define the vector $\overline{r}^e(s, t, \overline{v})$ as the vector pointing in the direction orthogonal to the envelope $\Gamma$, with magnitude $\overline{r}^e(s, t, \overline{v})$:

$$\overline{\boldsymbol{r}}^e(s,t,\overline{v}) := \boldsymbol{n}^e(s,t)\overline{r}^e(s,t,\overline{v}), \qquad\qquad (48)$$

where $n^e(s, t)$ is the unit vector normal to the envelope $\Gamma$ at the point identified by the parent element coordinates ($s, t, \overline{v} = -1$). For the classical Astley-Leis formulation, the phase distance $\overline{\mu}^e$ is defined in (29); after differentiating with respect to $\overline{r}^e$, we obtain

$$\frac{\partial \overline{\mu}^e}{\partial \overline{r}^e} = 1. \qquad\qquad (49)$$

Additionally, for the properties of the gradient operator, thanks to the relationship between the gradient of a function and its directional derivatives, we have:

$$\nabla_x \overline{\mu}^e \cdot \overline{\boldsymbol{r}}^e = \frac{\partial \overline{\mu}^e}{\partial \overline{r}^e} \overline{r}^e. \qquad\qquad (50)$$

Let's consider first the ideal scenario where the envelope $\Gamma$ is represented exactly, and no error arises from the geometrical discretization, and let's choose the infinite edges in the e-th element to be extruded orthogonally to the envelope $\Gamma$. In this case, $\overline{\mu}^e(s, t, \overline{v})$ represents the distance between the point with physical coordinates $x^e(s, t, \overline{v})$ and $\Gamma$. As such, the lines with constant $\overline{\mu}^e$ are perpendicular to $n^e(s, t)$. This means that $\nabla_x\overline{\mu}^e(s, t, \overline{v})$, which, for the properties of the gradient operator, is perpendicular to the $\overline{\mu}$ iso-lines, is parallel to $n^e(s, t)$ and, as a consequence, aligned with $\overline{r}^e$. Thus, we can write

$$\nabla_x\overline{\mu}^e(s,t,\overline{v}) \cdot \overline{\boldsymbol{r}}^e(s,t,\overline{v}) = \left\|\nabla_x\overline{\mu}^e(s,t,\overline{v})\right\|\overline{r}^e(s,t,\overline{v}). \qquad\qquad (51)$$

Finally, inserting (50) and (49) in (51) and simplifying the resulting equation, we obtain

$$\left\|\nabla_x\overline{\mu}^e(s,t,\overline{v})\right\| = \frac{\partial \overline{\mu}^e}{\partial \overline{r}^e}(s,t,\overline{v}) = 1. \qquad\qquad (52)$$

This means that, if the extrusion direction is orthogonal to the envelope $\Gamma$ for all the infinite edges, we obtain $\|\nabla_x\overline{\mu}\| = 1$ everywhere in the exterior domain. However, because of the geometrical approximation, small numerical errors can arise, potentially causing $\|\nabla_x\overline{\mu}\| > 1$ for some points. Astley and Hamilton [28] proposed to remedy this effects by enforcing $M_{IE} = 0$ (which is equivalent to imposing $\|\nabla_x\overline{\mu}\| = 1$ everywhere), arguing that the consequent change in the frequency domain solution is negligible, provided that the transverse node spacing is sufficiently fine to resolve adequately the curvature of $\Gamma$. As shown earlier in this section, it is actually sufficient to impose $M_{IE} \geq 0$, which is equivalent to imposing $\|\nabla_x\overline{\mu}\| \leq 1$; this can be achieved by enforcing $\|\nabla_x\overline{\mu}\| = 1$ only for points where $\|\nabla_x\overline{\mu}\| > 1$ and leave $\|\nabla_x\overline{\mu}\|$ unchanged for points where $\|\nabla_x\overline{\mu}\| = 1$.

Requiring that the infinite elements are extruded orthogonally to $\Gamma$ means that, in general, the virtual sources cannot be located at the center of the smallest sphere enclosing all the sound sources. This limits the accuracy of all standard mapped formulations, especially for envelopes with an high aspect ratio, and explains the need to develop a new flexible infinite element formulation.

### 3. Flexible infinite element formulation

In this section, we describe the new flexible formulation, for which the geometric and field shape functions are constructed using two distinct mappings. This feature makes the accuracy of our formulation independent of the geometry of the infinite edges. As a consequence, the flexible infinite elements can be used to accurately simulate transient acoustic wave propagation problems, for arbitrarily convex-shaped envelopes.

#### 3.1. Modified shape functions

We recall that we denote with $r$ the distance from the center of radiation and with $\overline{r}$ the interpolated distance from the virtual sources. Our goal is to modify the shape functions formulation, to obtain

$$\text{colsp}\left\{\left[\left(\frac{1}{r^e}\right),\left(\frac{1}{r^e}\right)^2,...,\left(\frac{1}{r^e}\right)^m\right]\exp\left[-\mathrm{i}kr^e\right]\right\}\subseteq\text{colsp}\left\{\phi\right\} \qquad (53)$$

everywhere inside the infinite elements, irrespective of the location of the virtual sources. To do that, we first redefine the phase distance as

$$\mu^e\left(s,t,\overline{v}\right):=r^e\left(s,t,\overline{v}\right)-r_\Gamma^e\left(s,t\right), \qquad (54)$$

where $r^e$ is computed according to (28), and $r_\Gamma^e$ is the radial distance evaluated on $\Gamma$:

$$r_\Gamma^e\left(s,t\right):=r^e\left(s,t,\overline{v}=-1\right)=\left\lVert\boldsymbol{x}_\Gamma^e\left(s,t\right)\right\rVert. \qquad (55)$$

One may try to write the shape functions as

$$\phi=\boldsymbol{\psi}^r\left(s,t,r^e\left(s,t,\overline{v}\right)\right)\exp\left[-\mathrm{i}k\mu^e\right], \qquad (56)$$

where $\psi^r(s, t, \overline{r}^e(s, t, \overline{v}))$ would be obtained as a tensor product between the usual polynomial functions in the tangential direction and rational functions in the radial direction, specifically designed to satisfy (53). However, the construction of these rational functions would not be trivial and the effort of implementing such a formulation in an existing FEM software would be considerable. Instead, we introduce a new auxiliary mapping between the radial distance $r$ and the auxiliary coordinate $v$:

$$v\left(s,t,\overline{v}\right):=1-\frac{2r_\Gamma^e\left(s,t\right)}{r^e\left(s,t,\overline{v}\right)}. \qquad (57)$$

It should be noticed that this mapping largely resembles (25), with $v$, $r^e$ and $r_\Gamma^e$ instead of $\overline{v}$, $\overline{r}^e$ and $\overline{r}_\Gamma^e$. A schematic representation of the auxiliary mapping is shown in Fig. 4.

Exploiting the auxiliary mapping, we propose a new formulation for the shape functions:

$$\phi=\boldsymbol{\psi}\left(s,t,v\right)\exp\left[-\mathrm{i}k\mu^e\right], \qquad (58)$$

where $\psi$ are the usual polynomials, expressed with respect to the variables $s, t, v$ instead of the variables $s, t, \overline{v}$ as in (30) for the Astley-Leis formulation.

Physical element                     Auxiliary parent element

o Center of radiation

● Mapping nodes

Figure 4: Schematic representation of the auxiliary mapping in a flexible infinite element.

As an example, let's consider the first order Lagrange polynomials in two dimensions, for ease of notation:

$$\boldsymbol{\psi}(t,v)^{\top} = \begin{pmatrix} \frac{1-t}{2}\frac{1-v}{2} \\ \frac{1+t}{2}\frac{1-v}{2} \\ \frac{1-t}{2}\frac{1+v}{2} \\ \frac{1+t}{2}\frac{1+v}{2} \end{pmatrix}. \tag{59}$$

We emphasize that the only difference between (31) and (59) is that $\bar{v}$ gets substituted with the auxiliary variable $v$. By inserting the radial mapping (57) in (59), it can be verified that the following relationship holds:

$$\left\{ \frac{1}{r^e} \right\} \subseteq \operatorname{colsp}\left\{ \boldsymbol{\psi} \right\}, \tag{60}$$

Extending the above argument to higher order polynomials in three dimensions, we obtain:

$$\operatorname{colsp}\left\{ \left[ \left(\frac{1}{r^e}\right), \left(\frac{1}{r^e}\right)^2, ..., \left(\frac{1}{r^e}\right)^m \right] \exp\left[ -\mathrm{i}kr^e \right] \right\} \subseteq \operatorname{colsp}\left\{ \boldsymbol{\phi} \right\}, \tag{61}$$

where $m$ is the selected radial order in the exterior domain. This is true not only for points along the infinite edges, but for any point inside the infinite element.

In other words, the multipole expansion (9), truncated at order $m$, belongs to the space spanned by the columns of the $m$-th order shape functions. The concept of virtual sources does not apply to our formulation, as relationship (61) is true, irrespective of the geometry of the infinite elements. This feature makes our formulation more flexible than traditional mapped formulations, since the accuracy does not depend on the positioning of the mapping nodes. As in the Astley-Leis formulation, the test functions are chosen as the weighted complex conjugate of the shape functions:

$$\widetilde{\boldsymbol{\phi}}_{\boldsymbol{n}} = w\boldsymbol{\psi}(s,t,v)\exp\left[ \mu^e \right]. \tag{62}$$

*3.2. Time-domain stability of the modified infinite element*

The new flexible infinite element requires a separate stability analysis, since the definition of $\mu^e$ in (54) differs from the definition of $\overline{\mu}^e$ in (29), used in the standard mapped formulations. In particular, even when the infinite elements are extruded orthogonally to the envelope $\Gamma$ and there is no approximation in the geometrical discretization, it cannot be guaranteed that $\|\nabla_x \mu\| \leq 1$ everywhere. This poses a challenge for the stability of the method.

First, we analyze the behavior of $\|\nabla_x \mu\|$, showing that, when the infinite edges are orthogonal to the envelope $\Gamma$, $\|\nabla_x \mu\| \leq 1$ in the near-field, while $\|\nabla_x \mu\| \geq 1$ in the intermediate and far-field. Then, we propose a strategy to stabilize the time-domain formulation without compromising the accuracy.

*3.2.1. Behavior of $\|\nabla_x \mu\|$*

In this subsection, we study the behavior of $\|\nabla_x \mu\|$, when the infinite edges are extruded in the direction orthogonal to the envelope $\Gamma$, as in the time-stable infinite elements proposed in [28]. For simplicity, we consider the two-dimensional case, but all the considerations we make hold in three dimensions.

Let's consider a point on the envelope $\Gamma$, with parent element coordinates $(t, \overline{v} = -1)$. First, we show that, $\|\nabla_x \mu(t, \overline{v} = -1)\| \leq 1$, provided that the the infinite edges in the element are aligned with the normal vector of the envelope $\Gamma$ at the mapping nodes on $\Gamma$. For the properties of the gradient

Figure 5: Schematic representation of a region inside a flexible infinite element. The infinite edges are extruded orthogonally to the envelope $\Gamma$.

operator, thanks to the relationship between the gradient of a function and its directional derivatives, we have:

$$\nabla_x \mu^e(t, -1) \cdot \overline{r}^e(t, -1) = \frac{\partial \mu^e}{\partial \overline{r}^e}(t, -1)\overline{r}^e_\Gamma \qquad (63)$$

The envelope $\Gamma$ is an iso-line of $\mu$, with $\mu = 0$ by definition. It follows

$$\left\|\nabla_x \mu^e(t, -1)\right\| = \frac{\partial \mu^e}{\partial \overline{r}^e}(t, -1), \qquad (64)$$

since the gradient of $\mu$ is perpendicular to the iso-lines of $\mu$. For the standard Astley-Leis formulation, we have already shown that relationship (52) holds. Let's define

$$\Delta \overline{r}^e(\delta) := \overline{r}^e(\overline{v} = -1 + \delta) - \overline{r}^e_\Gamma, \qquad (65)$$

and

$$\Delta r^e(\delta) := r^e(\overline{v} = -1 + \delta) - r_\Gamma^e. \qquad (66)$$

The partial derivatives of $\overline{\mu}$ and $\mu$ with respect to $\overline{r}^e$ can be written, according to the definition of derivative, respectively as

$$\frac{\partial \overline{\mu}^e}{\partial \overline{r}^e}(t, -1) = \lim_{\delta \to 0} \frac{\Delta \overline{r}^e(\delta)}{\delta} \qquad (67)$$

and

$$\frac{\partial \mu^e}{\partial \overline{r}^e}(t, -1) = \lim_{\delta \to 0} \frac{\Delta r^e(\delta)}{\delta}. \qquad (68)$$

By triangle inequality (see Figure 5), we have

$$r^e(\overline{v} = -1 + \delta) \leq \Delta \overline{r}^e + r_\Gamma^e, \qquad (69)$$

from which follows

$$\Delta r^e \leq \Delta \overline{r}^e. \qquad (70)$$

As a consequence, we finally obtain

$$\frac{\partial \mu^e}{\partial \overline{r}^e}(t, -1) \leq \frac{\partial \overline{\mu}^e}{\partial \overline{r}^e}(t, -1) = 1. \qquad (71)$$

Once again, as in the classical Astley-Leis formulation, small errors may arise because of the geometrical approximation. In this case, as in [28], we propose to neglect these small discrepancies, to ensure the stability of the method.

For $\overline{v} \to 1$, it is easy to show that $\triangle r^e \to \triangle \overline{r}^e$ which implies

$$\lim_{\overline{v} \to 1} \|\nabla_x \mu^e\| \to 1. \qquad (72)$$

In the region between $\overline{v} = -1$ and $\overline{v} \to 1$, we don't have any guarantee that $\|\nabla_x \mu^e\| \leq 1$. The exact behavior of $\|\nabla_x \mu^e\|$ depends on the geometry of the infinite element. In practice, geometries for which $\|\nabla_x \mu^e\| > 1$ for $\overline{v} > 0$ are often encountered (see Figure 6).

*3.2.2. Strategy to stabilize the system*

Because of the behavior of $\|\nabla_x \mu^e\|$, analyzed in the previous subsection, a strategy to stabilize the flexible infinite element formulation is necessary. In the non-stabilized version, the mass matrix contribution at the element level writes:

$$\mathbf{M}_{\mathbf{IE}}^e = \int_{\Omega^e} \left\{ \frac{1}{c^2} w \boldsymbol{\psi}^\top \boldsymbol{\psi} (1 - \|\nabla_x \mu^e\|) \right\} d\Omega, \qquad (73)$$

To stabilize the new flexible formulation, we propose to substitute the non-stabilized mass matrix $\mathbf{M}_{\mathbf{IE}}^e$ with $\widetilde{\mathbf{M}}_{\mathbf{IE}}^e$, where

$$\widetilde{\mathbf{M}}^e_{\mathbf{IE}} = \int_{\Omega^e} \left\{ \frac{1}{c^2} w \boldsymbol{\psi}^\top \boldsymbol{\psi} (1 - \|\nabla_x \widetilde{\mu}^e\|) \right\} \mathrm{d}\Omega, \qquad (74)$$

with

$$\begin{cases} \|\nabla_x \widetilde{\mu}^e(s,t,\overline{v})\| = \|\nabla_x \mu^e(s,t,\overline{v})\| & \text{if } \|\nabla_x \mu^e(s,t,\overline{v})\| \le 1 \\ \|\nabla_x \widetilde{\mu}^e(s,t,\overline{v})\| = 1 & \text{if } \|\nabla_x \mu^e(s,t,\overline{v})\| > 1. \end{cases} \qquad (75)$$

When computing (74) using Gauss quadrature, we can write

$$\widetilde{\mathbf{M}}^e_{\mathbf{IE}} = \boldsymbol{\Psi}_{\mathbf{g}}^\top \widetilde{\mathbf{D}}^e \boldsymbol{\Psi}_{\mathbf{g}}, \qquad (76)$$

with the $j$-th component of the diagonal matrix $\widetilde{D}^e$

$$\widetilde{\mathbf{D}}^e_{jj} = \frac{1}{c^2} g^w_j \cdot \det(J_j) \left(1 - \|\nabla_x \widetilde{\mu}^e(\boldsymbol{g}_j)\|\right) w(\boldsymbol{g}_j). \qquad (77)$$

This ensures that $\widetilde{\mathbf{M}}^e_{\mathbf{IE}} \ge 0$ and thus that the formulation is time-stable.

As an example, we consider a two-dimensional case, where the FE boundary is an elliptical envelope, with a width of 6 and a height of 2. In Figure 6 , we plot $\|\nabla_x \mu^e\|$ and $\|\nabla_x \widetilde{\mu}^e\|$ as a function of $v$, for an infinite edge extruded orthogonally to the envelope and starting from the mapping node $\Gamma^e_1$ with coordinates $x^e_{\Gamma_i} = (0.5, 0.986)$ .

(a) Non-stabilized formulation  (b) Stabilized formulation

Figure 6: $\|\nabla_x \mu^e\|$ and $\|\nabla_x \widetilde{\mu}^e\|$ along an infinite edge, extruded orthogonally to an elliptical envelope (with an aspect ratio of 3), at the mapping node $(0.5, 0.986)$.

### 3.2.3. Accuracy of the stabilized formulation

In the previous subsection, we showed how to stabilize the flexible infinite element formulation. However, the stabilization procedure may potentially affect the accuracy of the method. This comes from the fact that some of the entries in $\widetilde{D}^e$ may differ substantially from the corresponding entries in $D^e$, making $\widetilde{\mathbf{M}}^e_{\mathbf{IE}}$ a bad approximation of $\mathbf{M}^e_{\mathbf{IE}}$ .

Exploiting relationship (71), which holds when the infinite edges are extruded orthogonally to the envelope $\Gamma$, we can design a strategy to ensure the accuracy of the flexible infinite elements after the stabilization procedure. We propose to tune the power $p_\omega$ in the weight factor $\omega$, to make sure that the stabilization procedure does not significantly affect the accuracy. In practice, this is achieved by controlling the relative difference between $\widetilde{D}^e$ and $D^e$: the smaller this difference, the smaller the accuracy loss. We recall that the weight factor in the Astley-Leis formulation is (38), with $p_\omega = 2$. We observe

that $\omega$ = 1 at the envelope and $\omega \to 0$ as $\bar{\upsilon} \to 1$. By increasing $p_\omega$, we make the weighting factor even smaller, for $\bar{\upsilon}$ > -1. Let's consider the j-th Gauss point $g_\kappa$, for which $\|\nabla_x \mu(g_\kappa)\|$ > 1 (we have already mentioned that this typically happens for $\bar{\upsilon}$ > 0). The corresponding diagonal entry in the matrix $D^e$ is

$$\mathbf{D}^e_{\kappa\kappa} = \frac{1}{c^2} g^w_\kappa \cdot \det J_j \left(1 - \|\nabla_x \mu(g_\kappa)\|\right) w(g_\kappa), \qquad (78)$$

while the corresponding entry in $\tilde{D}^e$ is

$$\widetilde{\mathbf{D}}^e_{\kappa\kappa} = 0. \qquad (79)$$

We emphasize that, since relationship (71) holds for orthogonally extruded infinite edges, $g_\kappa$ cannot lie on the envelope $\Gamma$. Fort this reason, it is guaranteed that $\omega(g_\kappa)$ < 1 and we can impose

$$\left| \mathbf{D}^e_{\kappa\kappa} - \widetilde{\mathbf{D}}^e_{\kappa\kappa} \right| = \left| \mathbf{D}^e_{\kappa\kappa} \right| < \epsilon, \qquad (80)$$

by choosing

$$p_w > \left( \frac{\log(\epsilon)}{\log \left| \frac{1}{c^2} g^w_\kappa \cdot \det J_\kappa \left[ 1 - \|\nabla_x \mu^e(g_\kappa)\| \right] \right|} \right), \qquad (81)$$

where $\varepsilon$ is a tolerance value, set by the user. The parameter $p_\omega$ is chosen constant across the whole domain, to guarantee the continuity of the test functions across the whole domain, such that (81) is satisfied for all the infinite elements. A smaller tolerance $\varepsilon$ implies a smaller difference between $D^e$ and $\tilde{D}^e$ and, as a consequence, a smaller accuracy loss after the stabilization step. We emphasize that stability is guaranteed by (75), while the accuracy of the stabilized formulation is guaranteed by (81). In Appendix A, we present a bound for the accuracy loss due to the stabilization procedure, linking it to the chosen tolerance $\varepsilon$. The only cost of selecting $p_\omega$ > 2 is that an higher number of Gauss points are needed to carry out the computation, since the order of the polynomials to be integrated increases with $p_\omega$. Typically, for numerical acoustic simulations using the FEM, the most computationally intensive operation is the factorization of the fully assembled matrix; for this reason, despite an increase in the computational cost of the assembly step, the total computational cost of the flexible formulation is comparable to the Astley-Leis formulation, for the same number of Dofs. Additionally, in many cases, as we will document in Section 5 and 6, the flexible infinite elements result in a drastic decrease in the number of Dofs, thanks to their geometric flexibility, making the simulations less computationally intensive.

### 3.3. Mesh extrusion in the normal direction

As already explained in previous sections, the infinite edges need to be extruded orthogonally to the envelope $\Gamma$ to ensure stability in the time domain. Unfortunately, it is not trivial to compute the normal of the envelope $\Gamma$ for general convex shapes. In some cases, the information about the normal vectors could be provided by CAD tools, with the drawback of requiring an additional preprocessing step. In other cases, only meshed domains are available, without a reference geometry. We solve this issue by following the workflow presented in [47]. With this approach, only a mesh of the internal domain is necessary. The required normal vectors at the mapping nodes on $\Gamma$ are computed as follows:

- For a vertex, the normal vector $n^e(s, t)$ is taken as the average of the normal of the elements touching the vertex.

- Inside quadratic elements, for a node defined in the middle of an edge (or face), $n^e(s, t)$ is computed as the average of the normal vectors at the vertices belonging to the edge (or face).

The user has to specify the extrusion length, which is the distance $\bar{r}^e_{\Gamma_i}$ as defined is (12), for the $i$-th mapping node on $\Gamma$, with parent element coordinates $(s_i, t_i, -1)$, inside the e-th element. Then, the location of the mapping node $\Sigma^e_i$ inside the exterior domain is determined in the following way:

$$x_{\Sigma_i}^e = x_{\Gamma_i}^e + n^e(s_i, t_i)\overline{r}_{\Gamma_i}^e. \tag{82}$$

The process is repeated for all the mapping nodes on the envelope $\Gamma$, for all the infinite elements.

## 4. Software implementation of high-order finite and infinite elements

In this subsection, we discuss the implementation of the infinite elements into an high-order FEM code. The considerations made here hold both for the Astley-Leis formulation and the flexible infinite element. We refer to the adaptive order $p$-FEM approach described in [48], where Lobatto shape functions (also called integrated Legendre polynomials) are used, and to [49], where the method was generalized to include anisotropic orders. For a number of Helmholtz problems, this approach has been shown to drastically improve the efficiency of the numerical models, when compared with conventional FEM, exploiting the fact that high-order polynomial approximations are more effective at controlling the pollution effect. An added benefit of using a hierarchical set of shape functions, such as the Lobatto polynomials, is found when solutions in the frequency domain are required over a range of frequencies. It is possible to compute the element matrices only once for the highest order, and then, at each frequency, one can extract only the required portion of these matrices to assemble the global matrix. A key feature of the proposed method is the use of a simple local error indicator to select a priori the polynomial order in each element. For calculations over a range of frequencies, this approach requires only a single mesh, and the error estimator is able to select the suitable polynomial order in each element to maintain the efficiency and accuracy as the frequency is changed, by identifying the lowest order required for the accuracy target.

Infinite elements based on Lagrange polynomials have been shown to present conditioning problems for high radial orders [35]. The use of Jacobi [35] and Berstein [50] polynomials has been proposed to improve the conditioning and optimize the performance of Krylov-based iterative solvers. As pointed out in [35] Lobatto polynomials, even though sub-optimal from a conditioning perspective, outperform Lagrange polynomials in this respect.

By adopting the same type of polynomials for finite and infinite elements, the software implementation becomes particularly easy. In this case, the infinite element subroutine can be developed by reusing most of the routines called by its finite element counterpart. The only differences are that the new radial geometric mapping (23) needs to be implemented, and different formulas need to be used for the computation of the system matrices, which does not require any additional implementation effort. In other words, in a software implementation, the infinite elements can be simply seen as specialized anisotropic high-order elements. This is an important aspect, as the implementation burden of the infinite element method may hinder its broad use in practical applications. An additional benefit of using Lobatto polynomials also in the exterior domain is that the hierarchical structure of the system matrices is preserved for unbounded-domain simulations, and can be exploited for frequency-domain calculations.

The shape functions orders inside the FE domain are selected based on the a priori error estimator described in [48]; the radial order on the infinite edges is selected by the user, while the orders of the shape functions on the envelope $\Gamma$ are designed to ensure continuity with the FE domain; finally, vertex, edge and face Dofs are set to zero at infinity ($\overline{v} = 1$ in the parent elemenent), to enforce the decay of the pressure field.

## 5. Numerical validation

In this section, the flexible infinite element is compared to the Astley-Leis formulation, with numerical examples in two and three dimensions, both in the frequency and in the time domain. The FE domain is meshed with the mesh generator Gmsh [51], while the infinite elements are extruded at run time, using one of the following strategies:

- The confocal-rays approach, where the infinite edges are extruded in the radial direction and converge toward the center of radiation. In the Astley-Leis formulation, this means that all the virtual sources coincide with the center of radiation.

- The normal-rays approach, where the infinite edges are aligned with the vector $n$, normal to the FE boundary envelope $\Gamma$.

Curved triangular or tetrahedral elements are used in the internal domain, while the exterior mesh is made of quadrangular or prismatic elements. The results are obtained using an in-house Matlab code.

In the following examples, we will often refer to the relative $L^2$-error between the numerical and the reference solution, $u_{num}$ and $u_{ref}$ respectively, computed on the envelope $\Gamma$:

$$E_2(\Gamma) = \frac{\|u_{\text{num}} - u_{\text{ref}}\|_{L^2(\Gamma)}}{\|u_{\text{ref}}\|_{L^2(\Gamma)}} \qquad (83)$$

and in the interior domain (the FE domain):

$$E_2(\Omega_i) = \frac{\|u_{\text{num}} - u_{\text{ref}}\|_{L^2(\Omega_i)}}{\|u_{\text{ref}}\|_{L^2(\Omega_i)}}. \qquad (84)$$

When using the flexible formulation for transient problems, we will measure the error induced in the frequency domain by the stabilization procedure (see discussion in Section 3.2.3), for the largest frequency of interest, as:

$$E_\infty^{\text{st}}(\Omega_i) = \frac{\|u_{\text{num}}^{\text{st}} - u_{\text{num}}^{\text{unst}}\|_{\infty(\Omega_i)}}{\|u_{\text{num}}^{\text{unst}}\|_{\infty(\Omega_i)}}, \qquad (85)$$

where $u_{\text{num}}^{\text{st}}$ is obtained using the stabilized formulation, while $u_{\text{num}}^{\text{unst}}$ is obtained using the non-stabilized formulation.

*5.1. Monopole source in 2D*

First, we analyze the case of a monopole source in a 2D domain, for which the analytical solution is known:

$$u_{\text{ref}}(r) = \frac{iH_2^0(kr)}{4}, \qquad (86)$$

where $H_2^0$ is the Hankel function of the second kind and the monopole source location coincides with the center of radiation. The source is enclosed by a convex envelope and the two meshes generated using the confocal-rays and the normal-rays approach are shown in Figure 7. In the vicinity of the source, the mesh is refined, because of the singularity of the analytical solution at $r = 0$, while in the rest of the domain larger elements are used, to fully exploit the efficiency of high-order FEM. The characteristic length of the elements at the interface between the interior and the exterior domain is $h = 0.25$.

(a) Confocal rays

(b) Normal rays

Figure 7: 2D meshes used for the numerical experiments. The FEM mesh, the envelopes $\Gamma$ and $\Sigma$ (in blue) and the portion of the infinite edges between $\Gamma$ and $\Sigma$ are shown. In the confocal-rays approach, all the virtual sources coincide with the center of radiation. In the normal-rays approach, all the infinite edges are locally orthogonal to the envelope $\Gamma$. In both cases, the mesh is refined in the vicinity of the monopole source location, which coincides with the center of radiation.

### 5.1.1. Frequency-domain results

For the following frequency-domain results, the order of the shape functions is fixed (both in the interior and the exterior domain). Numerical convergence studies are done by investigating the effect of the order chosen on the accuracy of the methods. First of all, we compare the performance of the new flexible infinite element against the Astley-Leis formulation, for the confocal-rays configuration. Even though, for the configuration considered, all the virtual sources coincide with the center of radiation, the Astley-Leis formulation and the flexible formulation are still different. This is because, for the Astley-Leis formulation, the radial coordinates are found, as in (18) and (22), using the standard interpolating functions, while, for the flexible infinite element, they are computed as a function of the Cartesian coordinates, using (28) and (55). In Figure 8 we plot the $L^2$-error on the envelope $\Gamma$ for several frequencies, for both approaches, as a function of the order of the shape functions.

For all four frequencies, the $L^2$-error of the standard Astely-Leis formulation reaches a plateau, while the flexible infinite element approach displays better $p$-convergence properties. This results are explained by the fact that

(a) $k = 1$

(b) $k = 5$

(c) $k = 10$

(d) $k = 25$

Figure 8: Flexible infinite element (black) vs standard Astley-Leis element (gray), results for the confocal-rays configuration. All the virtual sources coincide with the center of radiation and with the location of the physical source.

(53) is satisfied everywhere for the flexible infinite elements, while for the Astley-Leis formulation it is only valid along the infinite edges, when the confocal-rays extrusion approach is adopted (see discussion in 2.2.2). In other words, the truncated multipole expansion (9) belongs to the space spanned by the shape functions in the whole exterior domain for the flexible formulation, but only along the infinite edges for the Astley-Leis formulation. The resulting accuracy difference is higher for coarser meshes, which are typically used in the context of high-order adaptive FEM, while it is negligible when fine meshes are used.

Next, we compare the flexible infinite elements with the Astley-Leis in-

Figure 9: Flexible infinite element (black) vs standard Astley-Leis element (gray), results for the normal-rays configuration. The mesh extrusion is performed as described in Section 3.3.

finite elements, when the normal-rays extrusion strategy is adopted. This serves as a preliminary to the time-domain comparison, where the normal rays strategy is the only one capable of delivering stable results. In Figure 9 we document the dramatic improvement, in terms of accuracy, brought by the flexible formulation. In this case, the results are explained by the fact that, once again, (53) is satisfied everywhere for the flexible formulation, since the space spanned by the shape functions does not depend on the orientation of the infinite elements; for the Astley-Leis infinite elements, by contrast, (53) is not satisfied, since the virtual sources do not coincide with the center of radiation.

### 5.1.2. Time domain

It is well known that the confocal-rays extrusion approach leads, in general, to unstable formulations in the time domain, as discussed in Section 2.3. For this reason, we focus only on the normal-rays approach. For this example, the monopole source is placed at (0.5, 0.4), to show that the flexible infinite elements work well even when the center of radiation does not coincide with the physical source. The input signal used for the simulation is a sine-wave, with $k = 20$, filtered using the Hamming window. So, the forcing vector $f_\tau(\tau)$, with $\tau \in [0, T]$, is

$$\boldsymbol{f}_\tau(\tau) = \underbrace{\frac{25}{46}\left[1 - \cos\left(\frac{2\pi\tau}{T}\right)\right]}_{\text{Hamming window}} \sin(k\tau)\boldsymbol{f}, \qquad (87)$$

where $f$ is the forcing vector in the frequency domain. The order of the shape functions in the FEM domain is selected adaptively, using the a priori error indicator from Bériot et al. [48], with target $L^2$-error $E_2 = 0.01$, while the radial order in the infinite domain is set to m = 6 for both cases. The power in (38) for the flexible formulation is set to $p_\omega = 6$ and the error induced by the stabilization procedure is $\mathrm{E}^{\mathrm{st}}_\infty = 0.0007$, computed according to (85) for $k$ = 20, the largest

**30**

wavenumber of interest for the problem analyzed. In other words, it is clear that the error induced by the stabilization procedure is negligible, since it is largely below the target error used to compute the shape functions orders in the FEM domain.

A reference numerical solution is computed on a larger circular FEM domain, centered at the monopole source position, with radius 2, using the Astley-Leis infinite elements with the infinite edges extruded in the radial direction, with extrusion length $\overline{r}_{\Gamma_i}^e = 2$ for all the infinite edges, so that all the virtual sources coincide with the location of the monopole source. The radial order in the infinite domain for the reference solution is set to 10. The radial quantities are computed according to expressions (28) and (55), to improve the accuracy of the reference solution (see discussion in Section 5.1.1). In other words, the radial quantities are not computed by interpolating the radial distances relative to the nodal values, but taking the distance of the interpolated points in the infinite elements from the center of radiation. This is equivalent to defining the interpolated location of the virtual sources to coincide with the center of radiation, thus leading to better accuracy (see discussion in Section 2.2.2). By virtue of this modification, in this particular configuration, the Astley-Leis formulation is equivalent to the flexible formulation. The accuracy improvement due to this modification was already documented in Section 5.1.1. The reference numerical solution in the time domain is computed constructing "zero-mass" infinite elements, following the procedure from Astley and Hamilton [28], which does not significantly affect the accuracy on circular domains. The fact that a large FEM domain is used, together with the fact that the modified interpolation of radial quantities is implemented, and that all the virtual sources coincide with the location of the physical source, ensures good accuracy of the reference model.

In Figure 10, the pressure history for two points on the convex envelope (point A = (-1.3, 0.2) and point B = (-0.78, -0.24)) is plotted as a function of time for the Astley-Leis formulation and the flexible formulation, together with the reference solution. The numerical solution obtained using the flexible formulation matches closely the reference solution, while the Astley-Leis formulation does not provide satisfactory results.

(a) Point A = (-1.3, 0.2).　　　　　(b) Point B = (-0.78, -0.24).

Figure 10: Performance of the flexible and Astley-Leis formulation for an arbitrary convex envelope (see Figure 7), in the time domain, using the normal-rays extrusion strategy. Pressure history at point A and point B on the convex envelope $\Gamma$. Comparison between reference (black line), flexible infinite element (dashed gray line) and traditional Astley-Leis formulation (red line). The radial order in the exterior domain is set to $m = 6$, while the orders in the interior domain are determined through the a priori error estimator.

## 5.2. Scattering of a plane wave by a sphere

In this subsection, we consider the scattering of a plane wave by a sphere and we test the performance of the flexible infinite elements and of the Astley-Leis infinite elements. Several polyhedral shapes, with rounded edges, were used as enclosing surfaces. Rounding the corners is necessary to guarantee the accuracy of the method, regardless of the infinite element formulation used, since the normal vector has to be continuous throughout the whole surface, for the extrusion direction to be orthogonal to the envelope at any point.

The scattering sphere has unit radius, while the pseudo-polyhedral domains have midradius 2 and fillet radius 0.2. The mesh used in the internal domain has elements with a characteristic length $h$ = 0.3, with a refinement corresponding to the rounded corners, to resolve the geometric details, and the order in the FEM region is once again set adaptively, using the a priori error indicator from Bériot et al. [48], with target $L^2$-error $E_2$ = 0.01.

*5.2.1. Frequency-domain results*

The reference analytical solution for this problem is:

$$p_{\text{ref}}(\boldsymbol{x}) = -\sum_{m=0}^{\infty} \mathrm{i}^m (2m+1) \frac{j'_m(ka_{\text{sca}})}{h_m^{(1)'}(ka_{\text{sca}})} h_m^{(1)}(kr) P_m(x/r), \quad r \geq a_{\text{sca}}, \quad (88)$$

where $a_{\text{sca}}$ is the radius of the scattering sphere, $j_m$ is the m-th order spherical Bessel function, $h_m^{(1)}$ is the m-th order first-kind spherical Hankel function, and $P_m$ is the mth-order Legendre polynomial.

The best-interpolation error is computed as the relative $L^2$-error between the analytical solution and its $L^2$-projection onto the finite element space:

$$\frac{\left\| \mathcal{P}u_{\text{ref}} - u_{\text{ref}} \right\|_{L^2(\Omega_i)}}{\left\| u_{\text{ref}} \right\|_{L^2(\Omega_i)}} \quad (89)$$

This error corresponds to the best numerical solution that can be reached, given the FE mesh and the order used, irrespective of the infinite element formulation used. In Figure 11 we show the numerical results obtained using flexible infinite elements extruded in the normal direction. We ran numerous simulations, varying the radial order $m$ in the exterior domain from 1 to 10; the shape functions order in the FEM domain where selected using the a priori error estimator, as already explained at the beginning of this section, and were left unchanged between different simulations. It can be observed that, for both frequencies the relative $L^2$-error in the interior domain $E_2(\Omega_i)$ approaches the best interpolation error for increasing radial order $m$. It can be seen that the pseudo-tetrahedron is the most challenging shape, since it is the closest one to the scattering surface.

(a) $k = 1$          (b) $k = 10$

Figure 11: Each colored line corresponds to one pseudo-polyhedral domain. Darker colors correspond to pseudo-polyhedra with more edges. Dashed lines: best interpolation error in the FE domain. The order of the shape functions in the interior domain is set adaptively, using the a priori error estimator, and is left unchanged between different simulations. The radial order $m$ is uniform throughout the exterior domain, and varies between different simulations.

*5.2.2. Time-domain results*

In this subsection, out of all the the pseudo-polyhedral shapes presented in Section 6.3.1, only the most challenging one, the pseudo-tetrahedron, was considered. We now consider the results from transient simulations, where the input signal is a sine-wave with $k = 10$, filtered by the Hamming function, as in the 2D case. In Figure 12, we show the pressure result at the envelope points A and B for the flexible infinite elements and the Astley-Leis infinite elements; for both cases the radial order in the infinite elements is set to 5, while the orders in the interior domain are determined through the a priori error estimator, as explained at the beginning of this section. The power in (38) for the flexible formulation is set

to $p_\omega$ = 6 and the error induced by the stabilization procedure is $\mathbf{E}^{st}_\infty = 0.001$ , computed according to (85) for $k$ = 10, the largest wavenumber of interest for the problem analyzed. Once again, it is clear that the error induced by the stabilization procedure is negligible, since it is largely below the target error used to compute the shape functions orders in the FEM domain.

As in the two-dimensional case, the reference numerical solution is computed on a larger FEM domain, consisting of a sphere with radius 2 surrounding the scatterer, using the Astley-Leis infinite elements with the infinite edges extruded in the radial direction, such that all the virtual sources coincide with the center of the scattering sphere. The radial order in the infinite domain for the reference solution is set to 10 and, once again, the radial quantities are computed according to expressions (28) and (55). The reference numerical solution in the time domain is computed constructing "zero-mass" infinite elements, following the procedure from Astley and Hamilton [28]. As in the two-dimensional case, good accuracy of the reference numerical model is guaranteed by the use of a large FEM domain, high radial order $m$, and the modified interpolation of radial quantities, combined with the fact that all the virtual sources coincide with the center of radiation.

Also for this case, it can be noticed that the flexible formulation outperforms the traditional Astley-Leis formulation.

(a) Point A = (1.137, 1.222, 0.560).          (b) Point B = (0.522, 1.426, 0.642).

Figure 12: Performance of the flexible and Astley-Leis formulation for a pseudo-tetrahedron enclosing the scattering sphere, in the time domain, using the normal-rays extrusion strategy. Pressure history at point A and point B on the convex envelope . Comparison between reference (black line), flexible infinite element (dashed gray line) and traditional Astley- Leis formulation (red line). The radial order in the exterior domain is set to $m = 6$, while the orders in the interior domain are determined through the a priori error estimator.

## 6. Application to a problem of industrial complexity

In this section, we present a workflow to tackle unbounded problems of industrial complexity, using the flexible infinite element formulation. In particular, to showcase the effectiveness of the method, we will consider the shark submarine, shown in Figure 13. For the frequency-domain validation,

(a) CAD model.

(b) Surface mesh, characteristic length $h = 0.02$.

(c) Convex envelope automatically generated at the minimal distance $d = 0.05$.

(d) Cut view of the final tetrahedral mesh.

Figure 13: Shark model.

we will simulate the scattering of a plane wave, while for the time domain we will consider a monopole source, located close to the FE boundary. An automatic algorithm for the creation of a convex envelope around the scatterer, together with the automatic extrusion of the infinite edges in the normal direction, is used. To accelerate transient simulations, we use MOR procedure, introduced by van de Walle [25] and van Ophem [26], called Automatic Krylov Subspace Algorithm (AKSA). The high level of automation of the proposed workflow, together with the computational efficiency made possible by the use of general-shaped convex envelopes, make it very attractive for realistic transient applications.

### 6.1. Automatic generation of a convex domain

In this subsection, we describe the automatic process to get a mesh for the computational domain. First, a surface mesh made of second-order triangular elements, with characteristic length $h = 0.02$, is created on the submarine. Secondly, an approximate convex hull is generated automatically using the quickhull algorithm [36], implemented in the simulation package Simcenter 3D [37] developed by Siemens Industry Software. The minimal distance from the submarine surface to the convex envelope is $d = 0.05$. Once again, quadratic triangular elements with characteristic length $h = 0.02$ are used to mesh the external surface. Then, a volume mesh, that comprises tetrahedral quadratic elements, is created between the two surface meshes. The infinite elements are extruded automatically along the normal direction, so that the transient formulation is time-stable, following the process described in Section 3.3. The final mesh, shown in Figure 13, is made of 183 519 quadratic elements and 232 959 nodes. Since the convex envelope lies inside the smallest sphere circumscribing the scatterer, convergence is not theoretically guaranteed by the Atkinson-Wilcox theorem. In Section 6.3.1 and Section 6.3.2, we will show, that, in practice, when attaching flexible infinite elements to the convex hull, good accuracy can be reached both in the time and in the frequency domain.

### 6.2. Model Order reduction procedure

Since the flexible infinite elements, as the traditional Astley-Leis infinite elements, result in frequency-independent and sparse system matrices, their use in combination with Krylov-based MOR is particularly attractive. To accelerate transient simulations, we use the AKSA [25], [26] algorithm, which aims at building automatically a reduced order model, whose frequency response function (FRF) matches the FRF of the initial full order model (FOM), within a user-specified tolerance, in the frequency range of interest, by only using a few system solves and enriching the projection basis with higher-order moments. To obtain a time-domain reduced model of the shark submarine, for example, valid between $k = 5$ and $k = 50$, with a relative error tolerance tol = 0.01, only 5 full system solves were necessary.

### 6.3. Results

#### 6.3. 1. Frequency-domain results

We now test the performance of the flexible infinite element for the scattering of plane waves in the frequency domain. The simulations were performed for four plane waves, traveling at different angles of incidence $\alpha$ and $\theta$. As a reference, we use the results obtained using the automatic perfectly matched layer (AML) implementation [47], with 5 layers. For the configuration using infinite elements, the order in the FEM domain is assigned adaptively, using the a priori error estimator from Bériot et al. [48], with target $L^2$-error $\mathbf{E_2}$ = 0.01, while the radial order in the exterior domain is user-defined; for the AML case, the order is assigned adaptively in the whole computational domain. For all cases analyzed, the mesh used is the one shown in Figure 13. The relative $L^2$-error on the convex envelope is shown in Figure 14, for $k = 10$ and $k = 100$. In all cases, the infinite elements display a good convergence, with a relative $L^2$-error consistently below 0.03 for radial order 8, approaching the target error. Notice that in some cases the relative $L^2$-error is even below the target error; this can happen, since the adaptivity rules to determine the orders in the interior domain are based on a non exact estimation of the error.

(a) $k = 10$.  (b) $k = 100$.

Figure 14: Frequency domain results for plane waves hitting the shark submarine at different spherical angles $\alpha$ and $\theta$ (expressed in radians). Performance of the flexible infinite element formulation with infinite edges extruded in the normal direction. The AML implementation is used to compute the reference solution.

#### 6.3.2. Time-domain results

Finally, we consider the scattering of a monopole source placed in front of the shark, at (0, 0, 0.5).

The target $L^2$-error, used to compute the shape functions orders in the FEM domain, is set once again to $\mathbf{E_2}$ = 0.01. The radial order for the infinite elements is set to $m = 8$, fixed throughout the exterior domain. The power in (38) for the flexible formulation is set to $p_w = 8$ and the error induced by the stabilization procedure is Es' = 0.0002, computed according to (85) for $k = 50$, the largest wavenumber of interest for the problem analyzed. Once again, it is clear that the error induced by the stabilization procedure is negligible, since it is largely below the target error used to compute the shape functions orders in the FEM domain.

The input signal consists of a sine wave with $k = 45$, filtered using the Hamming window. A ROM, valid between $k = 5$ and $k = 50$, with a relative error tolerance tol = 0.01, is generated using the AKSA. The FRFs of the FOM and the ROM are compared in Figure 15, for a random entry in the solution vector. The final ROM has 90 Dofs, while the initial FOM had 465 905

Figure 15: FRF comparison ROM (gray line) vs FOM (black stars), for a random entry in the solution vector. Results obtained attaching flexible infinite elements to the convex hull.

Dofs. We ran all our numerical experiments on a Dell desktop computer with 384 Gb of RAM and 3.00GHz clock speed. The offline MOR procedure took 5 minutes and 45 seconds, and a single full-system solve, an operation performed several times during the AKSA, required 15.5 Gb of memory. As a reference, we compute the transient response to the same excitation, using the standard Astley-Leis formulation, with a spherical envelope surrounding the submarine. In this case, the model has 1 039 249 nodes, 801 405 elements and 2 515 697 Dofs, 5 times more than the convex-hull model. The offline MOR procedure took 95 minutes, considerably more than the previous case, and for a full-system solve 151.9 Gb of memory are necessary; additionally, the projection basis, that needs to be stored throughout the whole MOR process, is 5 times larger than before, as the number of rows corresponds to the Dofs of the FOM. As in the previous case, the final ROM has 90 Dofs. In Table 1 we summarize the data on the computational requirement to build a ROM using the AKSA for the two models.

Table 1: Computational requirements for the AKSA, comparison between model with convex hull and spherical envelope enclosing the submarine.

|  | Dofs | Time [min.] | Memory (full-system solve) [Gb] |
| --- | --- | --- | --- |
| Convex hull | 465905 | 5.45 | 15.5 |
| Sphere | 2515697 | 95 | 151.9 |

(a) Point A = (-0.116, -0.230, -0.396).    (b) Point B = (-0.035, -0.002, -0.990).

Figure 16: Pressure history at points A and B on the submarine surface, using Astley-Leis infinite elements attached to the spherical envelope (black line) and flexible infinite elements attached to the convex hull (dashed gray line).

In Figure 16 we plot the pressure as a function of time at different points on the submarine surface, for for the convex hull and the spherical envelope models. The use of the convex hull model, made possible by the newly developed flexible infinite element formulation, is clearly more efficient, since the MOR process is considerably less expensive, while the accuracy is similar to the one obtained using the spherical envelope. In Figure 17 we show

(a) $\tau = 5$

(b) $\tau = 205$

(c) $\tau = 405$

(d) $\tau = 605$

0.50
0.10
0.03
-0.03
-0.10
-0.50

(e) Legend (non-dimensional pressure).

Figure 17: Transient results visualized in Simcenter 3D. Monopole source placed in front of the shark.

the visualization of the transient acoustic wave at different snapshots, using Simcenter 3D (version 2022.1).

## 7. Conclusion

In this work, we introduced a novel infinite element formulation, called flexible infinite element, for the simulation of unbounded wave propagation problems. One of the main disadvantages of traditional mapped formulations is that the accuracy depends on the geometrical configuration of the infinite elements. For transient simulations, where the infinite elements have to be extruded orthogonally to the FE boundary, the user is not free to locate the virtual sources where desired. This limits the accuracy of such formualtions, especially in the case in which envelopes of a high aspect ratio are used. In the flexible formulation, a new set of shape functions is used, that makes the accuracy independent of the location of the mapping nodes. The newly developed element can be used for transient simulations, with arbitrarily convex-shaped FE boundaries. A strategy to guarantee the stability of the proposed method in the time domain, and at the same time preserve the accuracy, was discussed in detail. The accuracy of the flexible formulation was tested with several examples, both in the frequency and in the time domain. It was shown how the new formulation can be easily implemented in a software based on high-order adaptive FEM. Finally, a workflow including the automatic extrusion of the infinite elements and the automatic order reduction of the resulting models was presented. Since typically higher order polynomials are used for the test functions, to guarantee the accuracy of the stabilized transient flexible formulation, the cost of the assembly step is higher than for standard Astley-Leis infinite elements (see discussion in Section 3.2.3). However, for most cases of interest, the most computationally expensive operation is the factorization step. In particular, the computational savings made possible by the use of the flexible infinite elements were demonstrated., especially for high-aspect ratio scatterers. For future research, it would be interesting to develop a new error estimator, to automatically determine the radial order of the shape functions in the infinite domain. Finally, it would be interesting to research new strategies to automate the choice of the power $p_w$ in the test functions for transient simulations, based on accuracy requirements from the user.

**Appendix A. Error bound for the stabilized flexible formulation**

In this appendix, we analyze the effects of the stabilization procedure on the accuracy of the solution $p$ of the linear system of equation (7). In particular, we develop an error bound, which links the accuracy loss to the chosen tolerance $\varepsilon$ in equation (80). Let's call $\mathbf{A}_{\text{full}}$ the fully assembled matrix

$$\mathbf{A}_{\text{full}} := \left[ -\omega^2 \mathbf{M} + i\omega \mathbf{C} + \mathbf{K} \right] \qquad (A.1)$$

and let the perturbed system be

$$\left( \mathbf{A}_{\text{full}} + \Delta \mathbf{A}_{\text{full}} \right) \left( \boldsymbol{p}(\omega) + \Delta \boldsymbol{p}(\omega) \right) = \boldsymbol{f}(\omega), \qquad (A.2)$$

where $\Delta \mathbf{A}_{\text{full}}$ is the perturbation in $\mathbf{A}_{\text{full}}$, introduced by the stabilization procedure, and $\Delta p(\omega)$ is the subsequent perturbation in the solution vector.

As stated in [52] we have

$$\frac{\|\Delta \boldsymbol{p}\|_\infty}{\|\boldsymbol{p}\|_\infty} \leq \frac{\kappa_\infty(\mathbf{A}_{\text{full}})}{1 - \kappa_\infty(\mathbf{A}_{\text{full}})\frac{\|\Delta \mathbf{A}_{\text{full}}\|_\infty}{\|\mathbf{A}_{\text{full}}\|_\infty}} \left( \frac{\|\Delta \mathbf{A}_{\text{full}}\|_\infty}{\|\mathbf{A}_{\text{full}}\|_\infty} \right), \qquad (A.3)$$

where the $\infty$-norm of a matrix $\mathbf{A} \in \mathbb{R}^{a \times b}$ is

$$\|A\|_\infty = \max_{i=1,\ldots,a} \sum_{j=1}^{b} |a_{ij}| \qquad (A.4)$$

and the condition number $\kappa_\infty$ is defined as

$$\kappa_\infty(\mathbf{A}_{\text{full}}) := \|\mathbf{A}_{\text{full}}\|_\infty \|\mathbf{A}_{\text{full}}^{-1}\|_\infty. \qquad (A.5)$$

Since the stabilization procedure consists in substituting the infinite elements' mass matrix contribution $\mathbf{M}_{\text{IE}}$ with the stabilized version $\widetilde{\mathbf{M}}_{\text{IE}}$, we have

$$\|\Delta \mathbf{A}_{\text{full}}\|_\infty = \|-\omega^2 (\mathbf{M}_{\text{IE}} - \widetilde{\mathbf{M}}_{\text{IE}})\|_\infty = \omega^2 \|\mathbf{M}_{\text{IE}} - \widetilde{\mathbf{M}}_{\text{IE}}\|_\infty. \qquad (A.6)$$

It is interesting to note that, since $\|\Delta \mathbf{A}_{\text{full}}\|_\infty$ is porportional to $\omega^2$, the accuracy loss is larger for the highest frequency of interest. At the element level, we can write

$$\mathbf{M}_{\text{IE}}^e - \widetilde{\mathbf{M}}_{\text{IE}}^e = \boldsymbol{\Psi}_{\text{g}}^\top \left( \mathbf{D}^e - \widetilde{\mathbf{D}}^e \right) \boldsymbol{\Psi}_{\text{g}}. \qquad (A.7)$$

The maximum entry of the matrix $\mathbf{D}^e$ - $\widetilde{\mathbf{D}}^e$ is at most $\varepsilon$, which is imposed through (80) and (81). As a consequence, the maximum entry of the matrix $\mathbf{M}_{\mathbf{IE}}^e - \widetilde{\mathbf{M}}_{\mathbf{IE}}^e$ is smaller than $n_g^2 \epsilon$, since $\boldsymbol{\Psi}_{\mathbf{g}} \in \mathbb{R}^{n_{\mathrm{IE}}^e \times n_g}$ and all its entries are smaller than or equal to one, when choosing Lobatto polynomials. The maximum number of element matrices $\mathbf{M}_{\mathbf{IE}}^e$ which contribute to an entry in the global matrix $\mathbf{M}_{\mathbf{IE}}$ is $n_{\max}$, with

$$n_{\max} := \max_{i=1,\ldots,n^\Gamma} n_{\mathrm{elem}}^i, \qquad (A.8)$$

where $n^\Gamma$ is the number of mapping nodes on the envelope $\Gamma$ and $n_{\mathrm{elem}}^i$ is the number of elements which share the $i$-th node. So, we have that the maximum entry in the matrix $\mathbf{M}_{\mathbf{IE}}$ - $\tilde{\mathbf{M}}_{\mathbf{IE}}$ is at most $n_{\max} n_g^2 \epsilon$. Using the oo-norm definition, we can write

$$\|(\mathbf{M}_{\mathbf{IE}} - \widetilde{\mathbf{M}}_{\mathbf{IE}})\|_\infty \le n_{\mathrm{nz}} n_{\max} n_g^2 \epsilon, \qquad (A.9)$$

with

$$n_{\mathrm{nz}} := \max_{i=1,\ldots,n_{\mathrm{IE}}} n_{\mathrm{nz}}^i, \qquad (A.10)$$

where $n_{\mathrm{nz}}^i$ is defined as the number of non-zero entries in the $i$-th row of the matrix $\mathbf{M}_{\mathbf{IE}}$. By substituting inequality (A.9) in (A.6), we obtain

$$\|\Delta \mathbf{A}_{\mathrm{full}}\|_\infty \le (\omega n_g)^2 n_{\mathrm{nz}} n_{\max} \epsilon, \qquad (A.11)$$

which can be substituted in (A.3), to obtain

$$\frac{\|\Delta \boldsymbol{p}\|_\infty}{\|\boldsymbol{p}\|_\infty} \le \frac{\kappa_\infty(\mathbf{A}_{\mathrm{full}})}{1 - \kappa_\infty(\mathbf{A}_{\mathrm{full}}) \frac{(\omega n_g)^2 n_{\mathrm{nz}} n_{\max} \epsilon}{\|\mathbf{A}_{\mathrm{full}}\|_\infty}} \left[ \frac{(\omega n_g)^2 n_{\mathrm{nz}} n_{\max} \epsilon}{\|\mathbf{A}_{\mathrm{full}}\|_\infty} \right]. \qquad (A.12)$$

Expression (A.12) represents the link between the tolerance $\varepsilon$, set by the user at the element level, and the accuracy loss coming from the stabilization procedure.

Additional possible implementations or alternative solutions of the invention also encompass combinations - that are not explicitly mentioned herein - of features described above or below with regard to the embodiments. The person skilled in the art may also add individual or isolated aspects and features to the most basic form of the invention.

It is part of the invention that not all steps of the method necessarily have to be performed on the same component or computer instance but can also be performed on different computer instances.

The properties, features and advantages of the invention described above, as well as the manner they are achieved, become clearer and more understandable in the light of the following description and embodiments, which will be described in more detail in the context of the drawings. This following description does not limit the invention on the contained embodiments. Same components or parts can be labeled with the same reference signs in different figures. In general, the figures are not for scale. It shall be understood that a preferred embodiment of the present invention can also be any combination of the dependent claims or above embodiments with the respective independent claim.

These and other aspects of the invention will be apparent from and elucidated with reference to the embodiments described hereinafter.

BRIEF DESCRIPTION OF THE DRAWINGS

Embodiments of the invention are now described, by way of example only, with reference to the accompanying drawings, of which:

Figure 1   shows a representation of the underlying acoustic problem;
Figure 2   shows a flow diagram of method steps according to the invention.

The illustration in the drawings is in schematic form.
It is noted that in different figures, similar or identical elements may be provided with the same reference signs.

DESCRIPTION OF THE DRAWINGS

Figure 1 shows a schematic representation of the underlying acoustic problem. $\Omega i$ is the interior domain and $\Omega e$ is the exterior domain. $\Gamma$ is the interface between the two domains and $\Gamma_S$ is the envelope where the Sommerfeld condition - that no waves can be reflected at infinity - is imposed. The interface $\Gamma$ is a convex shape CXS around said object OBJ, using Quickhull algorithm QHA. The control volume CVL of the unbounded domain UBD is limited by a dotted line to illustrate that the boundary is not reflective like a normal boundary. Said object emits sound as a sound source SDS.

Figure 2 shows a simplified flow diagram illustrating the A computer-implemented method for modeling acoustics of an object OBJ as a model MDL in an unbounded domain UBD to determine a field variable FDV within a control volume CVL of the unbounded domain. The method comprises the following steps:

(a) Providing a coordinate system COS mapping the positions POS in said control volume CVL;
(b) Providing a geometrical model of a sound source SDS in said control volume CVL based on said coordinate system COS;
(c) Constructing a convex shape CXS around said sound source SDS using Quickhull algorithm QHA;
(d) Extruding infinite elements IFE starting from the convex shape CXS;
(e) Transforming the coordinate system COS into a field variable coordinate system FVC by mapping a radial coordinate of the coordinate system COS to an auxiliary coordinate $(v(s,t,\overline{v}))$ extending from the convex shape CXS to the infinite elements IFE;
(f) Constructing of field shape functions FSF using the auxiliary coordinate $(v(s,t,\overline{v}))$ ;
(g) Determining the field variable FDV by solving the model MDL using a solver SLV;
(h) Displaying via a display DSP said field variable FDV and/or key figures calculated from said field variable FDV or images illustrating said field variable FDV to a user USR;
(i) Providing said field variable FDV to an iterative object design process IOD of said object OBJ for designing said object OBJ with the design goal of improving acoustic emission;
(j) Generating said object OBJ according to a design as determined by said iterative object design process IOD. This generation GNT may be done by any manufacturing or production method.

The method may be implemented as or stored on or downloadable as a computer product CMP arranged and configured to execute the steps of the computer-implemented method according to the invention or one of its embodiments. The computer product CMP may be a computer hardware comprising the executable instructions stored in a data storage. Another additional or alternative option is to provide the method according to the invention via a computer-readable medium CRM encoded with executable instructions, that when executed, cause a computer or computer product to carry out a method according to the invention or one of its embodiments. Another option is providing the invention as a system SYS for determining acoustic parameters of an object's emission, the system SYS comprising at least one processor CPU being prepared by upload of computer-executable code to perform a method according to the invention or one of its embodiments.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also, elements described in association with different embodiments may be combined. It should also be noted that reference signs in the claims should not be construed as limiting the scope of the claims.

Independent of the grammatical term usage, individuals with male, female or other gender identities are included within the term.

**Claims**

1.   A computer-implemented method for modeling acoustics of an object (OBJ) as a model (MDL) in an unbounded domain (UBD) to determine a field variable (FDV) within a control volume (CVL) of the unbounded domain, comprising:

(a) Providing a coordinate system (COS) mapping the positions (POS) in said control volume (CVL),
(b) Providing a geometrical model of a sound source (SDS) in said control volume (CVL) based on said coordinate system (COS),

**characterized by** the additional steps:

(c) Constructing a convex shape (CXS) around said sound source (SDS) using Quickhull algorithm (QHA),
(d) Extruding infinite elements (IFE) starting from the convex shape (CXS),
(e) Transforming the coordinate system (COS) into a field variable coordinate system (FVC) by mapping a radial coordinate of the coordinate system (COS) to an auxiliary coordinate (v(s, t, v)) extending from the convex shape (CXS) to the infinite elements (IFE),
(f) Constructing of field shape functions (FSF) using the auxiliary coordinate (v(s,t,v)),
(g) Determining the field variable (FDV) by solving the model (MDL).

2. Method according to claim 1, wherein step (e) provides said auxiliary coordinate ($v(s,t,\overline{v})$) for positions outside of the convex shape (CXS) as:

$$v(s, t, \overline{v}) := 1 - \frac{2 r_\Gamma^e(s, t)}{r^e(s, t, \overline{v})}$$

wherein:

$s, t, \overline{v}$ are 3-dimensional coordinates that parametrize said position external of the convex shape (CXS) ($s, t$ are the tangential coordinates, $\overline{v}$ is the radial coordinate);

identifying the point on the border $\Gamma$ of the convex shape (CXS) that is closest to said external position, $r_\Gamma^e$ is the distance between the sound source (SDS) center and this specific point on $\Gamma$;
$r^e(s, t, \overline{v})$ defines the distance between the sound source (SDS) and said position;
$v(s, t, \overline{v})$ is the auxiliary coordinate.

3. A method according to at least one of the preceding claims 1 or 2, comprising
(h) displaying said field variable (FDV) and/or key figures calculated from said field variable (FDV) or images illustrating said field variable (FDV) to a user (USR).

4. A method according to at least one of the preceding claims 1, 2 or 3, comprising
(i) providing said field variable (FDV) to an iterative object design process (IOD) of said object (OBJ) for designing said object (OBJ) with the design goal of improving acoustic emission.

5. Computer product (CMP) arranged and configured to execute the steps of the computer-implemented method according to any one of the preceding claims 1 to 4.

6. A computer-readable medium (CRM) encoded with executable instructions, that when executed, cause the computer product according to claim 5 to carry out a method according to any one of claims 1 to 4.

7. System (SYS) for determining acoustic parameters of an object's emission, the system (SYS) comprising at least one processor (CPU) being prepared by upload of computer-executable code to perform a method according to at least one of the preceding claims 1 - 4.

FIG 1

# FIG 2

(a) COS
POS ⟋⟍ CVL

(b) COS
CVL [SDS]

(c) CXS SDS QHA

(d) IFE CXS

(e) CXS SDS QHA

(f) FSF
v(s, t, v̄)

(g) FDV → MDL
[SLV]

(h) FDV → [DSP] → USR

(i) FDV IOD OBJ

(j) GNT → OBJ

CMP
CRM
SYS, CPU

CXS

IFE

$$v(s, t, \bar{v}) := 1 - \frac{2 r^e_\Gamma (s, t)}{r^e(s, t, \bar{v})}$$

OBJ

Europäisches
Patentamt

European
Patent Office

Office européen
des brevets

# EUROPEAN SEARCH REPORT

**Application Number**

EP 23 20 4348

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KALLIVOKAS LOUKAS F. ET AL: "A simple impedance-infinite element for the finite element solution of the three-dimensional wave equation in unbounded domains", COMPUTER METHODS IN APPLIED MECHANICS AND ENGINEERING, vol. 147, no. 3-4, 1 August 1997 (1997-08-01), pages 235-262, XP093144591, AMSTERDAM, NL ISSN: 0045-7825, DOI: 10.1016/S0045-7825(97)00031-5 Retrieved from the Internet: URL:https://www.ce.utexas.edu/prof/kallivo kas/publications/pubs/CMAME-1997.pdf> * abstract; figure 1 * * Appendix B * * page 248, paragraph 2 * * page 240, paragraph 2 * * page 246, paragraph 5 * * section 4.2 * * the whole document * * page 247, paragraph 2 * ----- -/-- | 1-7 | INV. G06F30/23 ADD. G06F111/10 G06F113/08 G06F119/10 |

**TECHNICAL FIELDS SEARCHED (IPC)**

G06F

The present search report has been drawn up for all claims

| Place of search | Date of completion of the search | Examiner |
|---|---|---|
| Munich | 22 March 2024 | Dapp, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

**Application Number**

**EP 23 20 4348**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI L.-X. ET AL: "A Generalized Infinite Element for Acoustic Radiation", JOURNAL OF VIBRATION AND ACOUSTICS., vol. 127, no. 1, 1 February 2005 (2005-02-01), pages 2-11, XP093144607, XX ISSN: 1048-9002, DOI: 10.1115/1.1855927 Retrieved from the Internet: URL:http://asmedigitalcollection.asme.org/vibrationacoustics/article-pdf/127/1/2/5828153/2_1.pdf> * abstract; figure 3 * * section 2 * * page 4, left-hand column, last paragraph - right-hand column, paragraph 1 * * section 3.2 * * section 6 * * the whole document * | 1-7 | |
| X | BIZZARRI DAVIDE ET AL: "Model Order Reduction and Smart Virtual Sensing for Unbounded Vibro-Acoustics Using High Order FEM and Infinite Elements", , 7 September 2022 (2022-09-07), XP093144605, Retrieved from the Internet: URL:http://past.isma-isaac.be/downloads/isma2022/proceedings/Contribution_277_proceeding_3.pdf> * abstract * * section 2.1 * * the whole document * | 1-7 | **TECHNICAL FIELDS SEARCHED (IPC)** |

The present search report has been drawn up for all claims

| Place of search | Date of completion of the search | Examiner |
|---|---|---|
| Munich | 22 March 2024 | Dapp, Wolfgang |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 2 of 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HARTMANN, D.** ; **VAN DER AUWERAER, H.** The Executable Digital Twin: merging the digital and the physics worlds. *arXiv preprint arXiv:2210.17402*, 2022
- **DE MIGUEL, A. G.** ; **ATAK, O.** ; **BLANCO, M. A.** *A Digital Twin for full-field monitoring in multi-channel control with applications to direct field acoustic testing*
- Computational absorbing boundaries. **D. GIVOLI**. Computational acoustics of noise propagation in fluids-finite and boundary element methods. Springer, 2008, 145-166
- **A. BAYLISS** ; **E. TURKEL**. Radiation boundary conditions for wave-like equations. *Communications on Pure and applied Mathematics*, 1980, vol. 33, 707-725
- **J.-P. BERENGER**. A perfectly matched layer for the absorption of electromagnetic waves. *Journal of computational physics*, 1994, vol. 114, 185-200
- **U. BASU** ; **A. K. CHOPRA**. Perfectly matched layers for transient elastodynamics of unbounded domains. *International journal for numerical methods in engineering*, 2004, vol. 59, 1039-1074
- **J. DIAZ** ; **P. JOLY**. A time domain analysis of pml models in acoustics. *Computer methods in applied mechanics and engineering*, 2006, vol. 195, 3820-3853
- **Z. CHEN** ; **X. WU**. Long-time stability and convergence of the uniaxial perfectly matched layer method for time-domain acoustic scattering problems. *SIAM Journal on Numerical Analysis*, 2012, vol. 50, 2632-2655
- **A. MODAVE** ; **A. KAMENI** ; **J. LAMBRECHTS** ; **E. DELHEZ** ; **L. PICHON** ; **C. GEUZAINE**. An optimum pml for scattering problems in the time domain. *The European Physical Journal-Applied Physics*, 2013, vol. 64
- **A. MODAVE** ; **J. LAMBRECHTS** ; **C. GEUZAINE**. Perfectly matched layers for convex truncated domains with discontinuous galerkin time domain simulations. *Computers & Mathematics with Applications*, 2017, vol. 73, 684-700
- **S. FRANCOIS** ; **H. GOH** ; **L. F. KALLIVOKAS**. Non-convolutional second-order complex-frequency-shifted perfectly matched layers for transient elastic wave propagation. *Computer Methods in Applied Mechanics and Engineering*, 2021, vol. 377

- **B. KALTENBACHER** ; **M. KALTENBACHER** ; **I. SIM**. A modified and stable version of a perfectly matched layer technique for the 3-d second order wave equation in time domain with an application to aeroacoustics. *Journal of computational physics*, 2013, vol. 235, 407-422
- **P. BETTESS** ; **O. ZIENKIEWICZ**. Diffraction and refraction of surface waves using finite and infinite elements. *International Journal for Numerical Methods in Engineering*, 1977, vol. 11, 1271-1290
- **K. GERDES**. The conjugated vs. the unconjugated infinite element method for the helmholtz equation in exterior domains. *Computer Methods in Applied Mechanics and Engineering*, 1998, vol. 152, 125-145
- **R. ASTLEY** ; **G. MACAULAY** ; **J.-P. COYETTE** ; **L. CREMERS**. Three-dimensional wave-envelope elements of variable order for acoustic radiation and scattering. part i. formulation in the frequency domain. *The Journal of the Acoustical Society of America*, 1998, vol. 103, 49-63
- **L. CREMERS** ; **K. FYFE** ; **J. COYETTE**. A variable order infinite acoustic wave envelope element. *Journal of Sound and Vibration*, 1994, vol. 171, 483-508
- **O. ZIENKIEWICZ** ; **K. BANDO** ; **P. BETTESS** ; **C. EMSON** ; **T. CHIAM**. Mapped infinite elements for exterior wave problems. *International Journal for Numerical Methods in Engineering*, 1985, vol. 21, 1229-1251
- **W. EVERSMAN**. Mapped infinite wave envelope elements for acoustic radiation in a uniformly moving medium. *Journal of Sound and Vibration*, 1999, vol. 224, 665-687
- **D. S. BURNETT**. A three-dimensional acoustic infinite element based on a prolate spheroidal multipole expansion. *The Journal of the Acoustical Society of America*, 1994, vol. 96, 2798-2816
- **D. S. BURNETT** ; **R. L. HOLFORD**. Prolate and oblate spheroidal acoustic infinite elements. *Computer Methods in Applied Mechanics and Engineering*, 1998, vol. 158, 117-141
- **D. S. BURNETT** ; **R. L. HOLFORD**. An ellipsoidal acoustic infinite element. *Computer methods in applied mechanics and engineering*, 1998, vol. 164, 49-76
- **R. ASTLEY**. Transient wave envelope elements for wave problems. *Journal of Sound and Vibration*, 1996, vol. 192, 245-261

- **R. ASTLEY** ; **J. HAMILTON**. Infinite elements for transient flow acoustics. *7th AIAA/CEAS Aeroacoustics Conference and Exhibit*, 2001, 2273
- **R. ASTLEY** ; **J.-P. COYETTE** ; **L. CREMERS**. Three-dimensional wave-envelope elements of variable order for acoustic radiation and scattering, part ii. formulation in the time domain. *The Journal of the Acoustical Society of America*, 1998, vol. 103, 64-72
- **S. VAN OPHEM** ; **O. ATAK** ; **E. DECKERS** ; **W. DESMET**. Stable model order reduction for time-domain exterior vibro-acoustic finite element simulations. *Computer Methods in Applied Mechanics and Engineering*, 2017, vol. 325, 240-264
- **D. BIZZARRI** ; **O. ATAK** ; **S. VAN OPHEM** ; **H. BÉRIOT** ; **T. TAMAROZZI** ; **P. JIRANEK** ; **L. SCURRIA** ; **A. GARCIA DE MIGUEL** ; **M. ALVAREZ BLANCO** ; **K. JANSSENS**. Model order reduction and smart virtual sensing for unbounded vibroacoustics using high order fem and infinite elements. *Proceedings of ISMA/USD 2022*, 2022
- The power of model order reduction in vibroacoustics: And its applications in model-based sensing. **A. VAN DE WALLE**. Ph.D. thesis. KU Leuven, 2018
- **S. VAN OPHEM**. *Novel reduction techniques for exterior vibro-acoustic models and their use in model-based sensing and identification*, 2019
- **S. VAN OPHEM** ; **B. FORRIER** ; **D. BIZZARRI** ; **O. ATAK** ; **A. DE MIGUEL** ; **M. ELKAFAFY** ; **M. DAL BORGO** ; **T. TAMAROZZI** ; **M. ALVAREZ BLANCO** ; **K. JANSSENS et al.** Physics-based virtual acoustic sensing for enhanced direct field acoustic excitation testing. *Proceedings of ISMA/USD 2022*, 2022
- **R. ASTLEY** ; **J. HAMILTON**. The stability of infinite element schemes for transient wave problems. *Computer methods in applied mechanics and engineering*, 2006, vol. 195, 3553-3571
- **R. HOLFORD**. A multipole expansion for the acoustic field exterior to a prolate or oblate spheroid. *J. Acoust. Soc. Am.*, 1998
- **R. ASTLEY**. Mapped spheroidal wave-envelope elements for unbounded wave problems. *International Journal for Numerical Methods in Engineering*, 1998, vol. 41, 1235-1254
- **R. ASTLEY**. Transient spheroidal elements for unbounded wave problems. *Computer methods in applied mechanics and engineering*, 1998, vol. 164, 3-15
- **R. ASTLEY**. Infinite elements for wave problems: a review of current formulations and an assessment of accuracy. *International Journal for Numerical Methods in Engineering*, 2000, vol. 49, 951-976
- **R. ASTLEY** ; **J.-P. COYETTE**. The performance of spheroidal infinite elements. *International Journal for Numerical Methods in Engineering*, 2001, vol. 52, 1379-1396

- **L.-X. LI** ; **S. KUNIMATSU** ; **J.-S. SUN** ; **H. SAKAMOTO**. A new conjugated mapped infinite element. *Journal of Computational Acoustics*, 2004, vol. 12, 543-570
- **D. DREYER** ; **O. VON ESTORFF**. Improved conditioning of infinite elements for exterior acoustics. *International Journal for Numerical Methods in Engineering*, 2003, vol. 58, 933-953
- **C. B. BARBER** ; **D. P. DOBKIN** ; **H. HUHDANPAA**. The quickhull algorithm for convex hulls. *ACM Transactions on Mathematical Software (TOMS)*, 1996, vol. 22, 469-483
- *Siemens industry software simcenter nastran user's guide (version 2022.1)*, 2022, https://docs.sw.siemens.com/en-US/doc/289054037/ PL20201105151514625.xid1853788/xid1853789
- Infinite elements. **R. J. ASTLEY**. Computational Acoustics of Noise Propagation in Fluids-Finite and Boundary Element Methods. Springer, 2008, 197-230
- **R. ASTLEY** ; **G. MACAULAY** ; **J. COYETTE**. Mapped wave envelope elements for acoustical radiation and scattering. *Journal of Sound and Vibration*, 1994, vol. 170, 97-118
- **C. H. WILCOX**. A generalization of theorems of rellich and atkinson. *Proceedings of the American Mathematical Society*, 1956, vol. 7, 271-276
- **O. ZALESKI** ; **W.-C. VON KARSTEDT** ; **O. VON ESTORFF**. Zur modellierung mit boundary elementen und finiten elementen bei schallabstrahlungsberechnungen. *Deutschsprachige Anwender-Konferenz SYSNOISE, Bühlerhöhe*, 1999, vol. 1
- **D. DREYER** ; **S. PETERSEN** ; **O. VON ESTORFF**. Effectiveness and robustness of improved infinite elements for exterior acoustics. *Computer Methods in Applied Mechanics and Engineering*, 2006, vol. 195, 3591-3607
- **R. ASTLEY** ; **J. HAMILTON**. Numerical studies of conjugated infinite elements for acoustical radiation. *Journal of Computational Acoustics*, 2000, vol. 8, 1-24
- **D. DREYER**. Efficient infinite elements for exterior acoustics. *Shaker*, 2004
- **K. GERDES**. A review of infinite element methods for exterior helmholtz problems. *Journal of Computational Acoustics*, 2000, vol. 8, 43-62
- **J. CIPOLLA**. Acoustic infinite elements with improved robustness. *Proceedings of ISMA*, 2002, 2181-2187
- **H. BÉRIOT** ; **A. MODAVE**. An automatic perfectly matched layer for acoustic finite element simulations in convex domains of general shape. *International Journal for Numerical Methods in Engineering*, 2021, vol. 122, 1239-1261

- **H. BÉRIOT** ; **A. PRINN** ; **G. GABARD**. Efficient implementation of high-order finite elements for helmholtz problems. *International Journal for Numerical Methods in Engineering*, 2016, vol. 106, 213-240
- **H. BÉRIOT** ; **G. GABARD**. Anisotropic adaptivity of the p-fem for timeharmonic acoustic wave propagation. *Journal of Computational Physics*, 2019, vol. 378, 234-256
- **J. BIERMANN** ; **O. VON ESTORFF** ; **S. PETERSEN** ; **C. WENTERODT**. Higher order finite and infinite elements for the solution of helmholtz problems. *Computer Methods in Applied Mechanics and Engineering*, 2009, vol. 198, 1171-1188
- **C. GEUZAINE** ; **J.-F. REMACLE**. Gmsh: A 3-d finite element mesh generator with built-in pre-and post-processing facilities. *International journal for numerical methods in engineering*, 2009, vol. 79, 1309-1331
- **D. LEYKEKHMAN**. *Math 3795: Introduction to computational mathematics*, 2008